# EUROPÄISCHE PATENTSCHRIFT

(11) **EP 2 699 460 B1**
(45) Veröffentlichungstag und Bekanntmachung des Hinweises auf die Patenterteilung: **15.01.2020**
(21) Anmeldenummer: 11746491.7
(22) Anmeldetag: 18.08.2011
(51) Int. Cl.: B60T 13/66, B60T 13/68, B60T 17/22

(54) **SYSTEM MIT VENTILEINRICHTUNG FÜR EINE PNEUMATISCH BETRIEBENE BREMSANLAGE, VENTILEINRICHTUNG, BREMSBETÄTIGUNGSEINRICHTUNG, ANHÄNGERSTEUERVENTILEINRICHTUNG UND EINRICHTUNG ZUR STEUERUNG FÜR DAS SYSTEM, BREMSANLAGE, FAHRZEUG, VERWENDUNG EINER KOMPONENTE UND VERFAHREN ZUM UMRÜSTEN EINER BREMSANLAGE**
SYSTEM WITH VALVE DEVICE FOR A PNEUMATICALLY OPERATED BRAKE SYSTEM, VALVE DEVICE, BRAKE ACTUATION DEVICE, TRAILER CONTROL VALVE DEVICE, AND DEVICE FOR CONTROLLING FOR THE SYSTEM, BRAKE SYSTEM, VEHICLE, USE OF A COMPONENT, AND METHOD FOR RETROFITTING A BRAKE SYSTEM
SYSTÈME AVEC DISPOSITIF DE VANNES POUR UN SYSTÈME DE FREINAGE PNEUMATIQUE, DISPOSITIF DE VANNES, DISPOSITIF D'ACTIONNEMENT DES FREINS, DISPOSITIF DE VANNES DE COMMANDE DE REMORQUE ET DISPOSITIF DE COMMANDE DU SYSTÈME, SYSTÈME DE FREINAGE, VÉHICULE, UTILISATION D'UN COMPOSANT ET PROCÉDÉ DE MODIFICATION D'UN SYSTÈME DE FREINAGE

(30) Priorität: 05.11.2010 DE 102010050578
(43) Veröffentlichungstag der Anmeldung: 26.02.2014
(73) Patentinhaber: WABCO GmbH, 30453 Hannover (DE)
(72) Erfinder: KIEL, Bernd-Joachim, 31515 Wunstorf (DE); ROSENDAHL, Hartmut, 30167 Hannover (DE); ROTERS, Gerd, 31515 Wunstorf (DE); STRACHE, Wolfgang, 30966 Hemmingen (DE); STRUWE, Otmar, 30519 Hannover (DE)
(74) Vertreter: Lauerwald, Jörg
(86) Internationale Anmeldenummer: PCT/EP2011/004172
(87) Internationale Veröffentlichungsnummer: WO 2012/059150

(56) Entgegenhaltungen:
- EP-A1- 1 733 943
- EP-A1- 1 733 943
- WO-A1-2010/034476
- WO-A1-2010/034476
- WO-A1-2010/034477
- WO-A1-2010/034477
- DE-A1-102008 047 632
- DE-A1-102008 047 632

## Beschreibung

Die Erfindung betrifft ein System mit wenigstens einer Ventileinrichtung für eine pneumatisch betriebene Bremsanlage bspw. eines Kraftfahrzeugs. Eine derartige Bremsanlage weist die Ventileinrichtung mit wenigstens einem Ventil zur Aussteuerung bzw. Verstärkung eines Bremsdrucks und wenigstens eine Bremse, nämlich in der Regel eine Bremse an jedem Rad des Fahrzeugs auf. In Erwiderung auf eine Betätigung einer Bremsbetätigungseinrichtung, bspw. mittels eines Fußbremspedals, wird mittels der Ventileinrichtung ein pneumatischer Bremsdruck ausgesteuert und über Druckluftleitungen bzw. Rohre der Bremse zugeführt.

Ferner betrifft die Erfindung Komponenten des Systems, insbesondere die Bremsbetätigungseinrichtung, die Ventileinrichtung, eine Anhängersteuerventileinrichtung und ein elektronisches Steuergerät, eine Bremsanlage, ein Fahrzeug und ein Verfahren zum Umrüsten einer Bremsanlage mit diesen Komponenten. Bremsanlagen sind in verschiedenen Ausführungen bekannt, nämlich in einer Ausführung als rein pneumatische Bremsanlage, in einer Ausführung als sog. ABS-Bremsanlage und in einer Ausführung als sog. EBS-Bremsanlage. WO2010/034477A1 betrifft eine Ventilanordnung zur Brems- sowie Zusatzgerätesteuerung einer pneumatischen Bremsanlage eines Fahrzeuges mit pneumatischen Steuerventilen und anderen pneumatischen Komponenten zur Durchführung von Brems- und Bremszusatzfunktionen der Bremsanlage.

Bei der bekannten rein pneumatischen Bremsanlage weist die Bremsbetätigungseinrichtung ein Bremsventil auf, das in Erwiderung auf eine Betätigung des Fußbremspedals direkt einen pneumatischen Druck, nämlich einen Sollbremsdruck, aussteuert, der der Ventileinrichtung zugeführt wird. Die Ventileinrichtung weist in diesem Fall ein rein pneumatisches Relaisventil auf, das den Bremsdruck gemäß dem Sollbremsdruck aussteuert und ggf. gegenüber diesem Sollbremsdruck für ein schnelles Ansprechen der Bremsen luftmengenverstärkt bereitstellt.

Eine bekannte Ausführung als die o.g. ABS-Bremsanlage weist ein Antiblockiersystem (ABS) auf, mittels dem elektronisch in einen ansonsten pneumatisch gesteuerten Bremsvorgang eingegriffen und der Bremsdruck gehalten oder abgesenkt werden kann, um einer Blockierneigung eines von der Bremse abgebremsten Rades entgegenzuwirken, auch wenn der Sollbremsdruck erhöht bzw. nicht entsprechend verringert wird. Hierfür weist die ABS-Bremsanlage in der Regel elektromagnetisch steuerbare ABS-Ventile auf, die im Verlauf der pneumatischen Leitung zwischen der Ventileinrichtung und der Bremse angeordnet sind.

Andere bekannte ABS-Bremsanlagen weisen zusätzlich eine Antriebsschlupfregelung (ASR) und/oder eine elektronische Stabilitätskontrolle (ESC) auf. Hierfür sind in der Regel zusätzliche Magnetventile vorgesehen, mittels denen elektropneumatisch ein Bremsdruck ausgesteuert werden kann, der den von der Bremsbetätigungseinrichtung ausgesteuerten Sollbremsdruck übersteigt, so dass Räder einer Antriebsachse oder einzelne Räder im Falle ihres Durchdrehens bzw. im Falle einer Schleuderneigung des Fahrzeugs gezielt abgebremst werden können.

Bei der ebenfalls bekannten Ausführung als die o.g. EBS-Bremsanlage sorgt ein elektronisches Bremssystem (EBS) für einen komfortablen, elektronisch gesteuerten Bremsvorgang. Die Bremsbetätigungseinrichtung weist in diesem Fall einen Bremswertgeber auf, der elektronisch einen Bremswert erfasst, woraufhin rechnerisch aus diesem Bremswert ein Sollbremsdruck ermittelt wird. Dieser Sollbremsdruck wird an der Ventileinrichtung, die in diesem Fall ein Modulator ist, elektropneumatisch ausgesteuert und nachfolgend der Bremse zugeführt. Die Ventileinrichtung weist hierzu in der Regel mehrere Magnetventile auf, die es ermöglichen, dass sich der Bremsdruck an der Bremse dem Sollbremsdruck angleicht. Für die Regelung weist die Ventileinrichtung wenigstens einen Drucksensor auf. Eine Regelelektronik hierfür ist oftmals direkt an der Ventileinrichtung bzw. am Modulator angeordnet.

Die Bremsbetätigungseinrichtung der EBS-Bremsanlage steuert in der Regel zusätzlich mittels eines Bremsventils einen Sollbremsdruck direkt pneumatisch als Redundanzdruck aus. Die EBS-Bremsanlage bzw. die Ventileinrichtung ist so ausgebildet, dass im Falle eines Elektronikausfalls der Bremsdruck an der Bremse gemäß diesem Redundanzdruck rein pneumatisch ausgesteuert wird.

Die genannten unterschiedlichen Ausführungen von Bremsanlagen weisen somit unterschiedlich ausgebildete Bremsbetätigungseinrichtungen und Ventileinrichtungen auf. Ferner weisen diese Bremsanlagen weitere Komponenten, nämlich ein elektronisches Steuergerät und ggf. für den Einsatz in einem Zugfahrzeug eine Anhängersteuerventileinrichtung auf, die ebenfalls jeweils unterschiedlich zueinander ausgebildet sind.

Aufgrund der Tatsache, dass die Komponenten der verschiedenen bekannten Bremsanlagen eine unterschiedliche Funktionalität bereitstellen und daher unterschiedlich ausgebildet sind, sind sie auch unterschiedlich an einem Fahrzeug zu verbauen. Dies macht sowohl eine Erstausrüstung als auch eine Umrüstung eines Fahrzeugs aufwändig. Insbesondere ist es sehr aufwändig, ein Fahrzeug mit einer EBS-Bremsanlage in ein Fahrzeug mit einer ABS-Bremsanlage (ohne EBS) oder in eine rein pneumatische Bremsanlage (ohne ABS) umzurüsten.

Der Erfindung liegt daher die Aufgabe zugrunde, die Montage und den Austausch von Komponenten einer Bremsanlage, insbesondere zum flexiblen Ausrüsten mit einem gewählten Bremssystem bzw. zum Umrüsten von einem EBS-Bremssystem in ein ABS-Bremssystem oder rein pneumatisches Bremssystem, zu verbessern.

Die Erfindung löst diese Aufgabe mit einem System nach Anspruch 1, mit einer Ventileinrichtung nach Anspruch 7, mit einer Bremsbetätigungseinrichtung nach Anspruch 12, mit einer Anhängersteuerventileinrichtung nach Anspruch 13, mit einer Einrichtung zur Steuerung nach Anspruch 14, mit einer Bremsanlage nach Anspruch 15, mit einem Fahrzeug nach Anspruch 16, mit der Verwendung einer Komponente für eine Bremsanlage nach Anspruch 17 und mit einem Verfahren zum Umrüsten einer Bremsanlage nach Anspruch 19.

Die Erfindung stellt ein modulares System mit Komponenten bereit, die in der Bremsanlage eines Fahrzeugs verbaut werden können. Das System weist wenigstens eine Austauschkomponente in wenigstens zwei unterschiedlichen Varianten auf und ggf. zusätzliche Systemkomponenten, die für alle Varianten der Bremsanlage gleich sind bzw. die gleiche Funktionalität aufweisen. Die bzw. eine Austauschkomponente des Systems ist eine Ventileinrichtung, die wenigstens ein Ventil aufweist und in einer ersten Variante in einer EBS-Bremsanlage bzw. in einer Variante als Modulator für den Einsatz in einer elektronisch geregelten Ausführung der Bremsanlage ausgeführt ist. Diese erste Variante der Ventileinrichtung ist dabei derart ausgebildet, dass die Ventileinrichtung den Bremsdruck nach einem in Erwiderung auf eine Betätigung der Bremsbetätigungseinrichtung als Bremsanforderungssignal erzeugten elektrischen bzw. elektronischen Bremswert elektronisch geregelt aussteuert.

In einer zweiten Variante kann die Ventileinrichtung in einer ABS-Bremsanlage oder in einer rein pneumatisch gesteuerten Ausführung der Bremsanlage eingesetzt werden. Die Ventileinrichtung ist in der zweiten Variante derart ausgebildet, dass die Ventileinrichtung den Bremsdruck in Erwiderung auf eine Betätigung der Bremsbetätigungseinrichtung ausschließlich nach einem mittels dieser Betätigung pneumatisch ausgesteuerten Sollbremsdruck pneumatisch erzeugt.

Trotz der unterschiedlichen Funktionalität der ersten Variante gegenüber der zweiten Variante der Ventileinrichtung weisen beide Varianten der Austauschkomponente bzw. der Ventileinrichtung gleiche mechanische Befestigungsmittel und gleiche pneumatische Schnittstellen auf.

Vorzugsweise weisen die Befestigungsmittel an der ersten Variante untereinander die gleichen Abstände auf wie die Befestigungsmittel der zweiten Variante untereinander. Somit ist es möglich, beide Varianten der Ventileinrichtung alternativ zueinander an gleichen Befestigungspunkten am Fahrzeug zu befestigen.

Die Erfindung ermöglicht somit gleiche Bohrungen, Halterungen, Verrohrungen und Kabelbäume für EBS-Bremsanlagen und ABS-Bremsanlagen einzusetzen und die unterschiedlichen Ventileinrichtungen auf gleiche Weise bzw. alternativ an identischen Halterungen am Fahrzeug zu montieren. Dadurch ist ein einfaches erstes Ausrüsten eines Fahrzeugs mit einer Bremsanlage mit nur geringem Montageaufwand möglich. Insbesondere müssen nämlich bei der Montage trotz unterschiedlich auszurüstender Fahrzeuge nur eine vergleichsweise geringe Anzahl unterschiedlicher Komponenten bereitgestellt werden. Beim Verbauen der Austauschkomponenten kann daher vorzugsweise auf Haltebleche bzw. Adapter verzichtet werden oder es können gleiche Haltebleche für die verschiedenen Varianten einer jeweiligen Austauschkomponente verwendet werden.

Auch ein späteres Umrüsten einer EBS-Bremsanlage in eine ABS-Bremsanlage oder in eine rein pneumatisch betriebene Bremsanlage ohne ABS, wenn bspw. der Komfort einer EBS-Bremsanlage an einem neuen Einsatzort des Fahrzeugs nicht mehr benötigt wird, ist auf diese Weise einfach möglich. Ggf. kann somit beim Umrüsten auch auf jegliche elektronische Unterstützung verzichtet und als Austauschkomponente lediglich eine pneumatische Ventileinrichtung eingesetzt werden.

Vorzugsweise werden zum Umrüsten der Bremssysteme einer Bremsanlage einzelne Austauschkomponenten gegen andere Varianten der jeweiligen Austauschkomponente ausgetauscht. Dabei fällt jedoch bspw. ein EBS-Bremssystem in der Regel auf ein, insbesondere rein, pneumatisch betriebenes Bremssystem zurück, wenn eine EBS-Variante wenigstens einer Austauschkomponente gegen eine Variante eines pneumatisch betriebenen Bremssystems ausgetauscht wird. Die übrigen EBS-Varianten der Austauschkomponenten können vorzugsweise auch in Verbindung mit einem pneumatischen Bremssystem wie eine entsprechende pneumatische Variante verwendet werden.

Bevorzugt weisen Varianten der Ventileinrichtung, insbesondere die erste und die zweite Variante, jeweils einen wenigstens ein Magnetventil aufweisenden Ventilblock bzw. Magnetventilblock bzw. eine Ventilpatrone auf. Unter einem Ventilblock können dabei auch ein einzelnes Ventil oder mehrere Ventile verstanden werden. Insbesondere kann der Ventilblock entweder als einteiliger Block ausgebildet sein oder alternativ mehrere Bauteile, insbesondere ein oder mehrere Gehäuse sowie einzelne oder mehrere Ventile im Gehäuse bzw. in den Gehäusen, aufweisen. Die Ventilblöcke der unterschiedlichen Varianten sind bevorzugt derart ausgebildet, dass sie mechanisch wahlweise, insbesondere über gleiche Befestigungsmittel, an einem der Gehäuse befestigt werden können. Alternativ oder zusätzlich sind diese Ventilblöcke über gleiche interne pneumatische Schnittstellen pneumatisch mit den Gehäusen verbindbar bzw. verbunden. Insbesondere weisen die Ventilblöcke im Wesentlichen gleiche Abmessungen und/oder gleich angeordnete pneumatische und/oder mechanische Anschlüsse zu einem Gehäuse der Ventileinrichtung auf. Die Gehäuse der unterschiedlichen Varianten der Ventileinrichtung können daher im Wesentlichen gleich bzw. gleichartig zueinander ausgebildet sein. Unter im Wesentlichen gleichen Gehäusen sind bspw. vorliegend auch Gehäuse zu verstehen, die identische Gehäuseblöcke, jedoch unterschiedliche Gehäusedeckel aufweisen. Dadurch können kostengünstig zunächst gleiche Gehäuse für die unterschiedlichen Varianten gegossen werden. Eine ggf. erforderliche Anpassung an die unterschiedlichen Ventilblöcke bzw. die unterschiedlichen Funktionen ist durch unterschiedliche Bohrungen in den Gehäusen oder durch unterschiedliche Nutzung der Bohrungen möglich, so dass bspw. bei gleichem Belüftungsanschluss am Gehäuse die Belüftung an unterschiedlichen Stellen zum Ventilblock geführt wird und/oder dort unterschiedlichen Ventilen bzw. den Ventilen an unterschiedlichen Anschlüssen zugeführt werden kann.

Bevorzugt ist die erste Variante der Ventileinrichtung für den Einsatz als Achsmodulator oder Radmodulator in der elektronisch geregelten Ausführung der Bremsanlage ausgebildet. In diesem Fall ist der Ventilblock bevorzugt als 3-fach-Magnetventilblock mit drei Magnetventilen ausgebildet bzw. weist mehrere Magnetventile oder Gehäuse mit jeweils wenigstens einem Ventil oder mehreren Ventilen auf. Mittels der Magnetventile wird der Bremsdruck elektropneumatisch gemäß dem Bremswert eines Bremswertgebers ausgesteuert. Darüber hinaus kann eine Elektronik, um ein Blockieren von Rädern zu verhindern, ein Durchdrehen von Rädern zu verhindern und/oder das die Bremsanlage aufweisende Fahrzeug zu stabilisieren, den Bremsdruck erhöhen, halten oder erniedrigen, auch wenn dies nicht durch den Bremswert bzw. das Bremsanforderungssignal veranlasst ist.

Vorzugsweise steuert die Ventileinrichtung im Falle eines Ausfalls der elektropneumatischen Aussteuerbarkeit den Bremsdruck pneumatisch gemäß einem Redundanzdruck aus. Dieser Redundanzdruck wird zusätzlich zum Bremswert von der den Bremswertgeber aufweisenden Bremsbetätigungseinrichtung mittels eines Bremsventils erzeugt. Insbesondere wird der Redundanzdruck direkt durch Betätigung eines Fußbremspedals erzeugt.

Vorzugsweise ist die Ventileinrichtung ein Achsmodulator, mittels dem die Bremsen an mehreren Rädern einer Achse ansteuerbar sind. Alternativ ist die Ventileinrichtung ein Radmodulator, der die Ansteuerung einer einzelnen Bremse erlaubt. Ggf. weist die Bremsanlage sowohl einen Achsmodulator zum gleichzeitigen Abbremsen der Räder an einer Achse als auch Radmodulatoren zum einzelnen Abbremsen der Räder an einer anderen Achse des Fahrzeugs auf.

Die zweite Variante der Ventileinrichtung für den Einsatz in der pneumatisch gesteuerten Ausführung der Bremsanlage ist in einer bevorzugten Ausführungsform als Radmodulator ausgebildet. Der Ventilblock ist dabei als 3-fach-Magnetventilblock mit drei Magnetventilen ausgebildet. Somit kann einerseits mittels der Ventileinrichtung der Bremsdruck pneumatisch gemäß dem Sollbremsdruck erzeugt werden. Andererseits ist es möglich, mittels der Magnetventile einen höheren oder tieferen Druck auszusteuern bzw. zu halten. Insbesondere mittels eines Antiblockiersystems und/oder mittels einer Antriebsschlupfregelung kann elektropneumatisch der Bremsdruck ausgesteuert werden. Dadurch sind nachgeschaltete Magnetventile, insbesondere ABS-Magnetventile, entbehrlich.

In einer alternativen Ausführung dieser zweiten Variante ist die Ventileinrichtung als Achsmodulator und der Ventilblock als 1-fach-Magnetventilblock mit einem Magnetventil ausgebildet. Das Magnetventil erlaubt es, für eine Antriebsschlupfregelung den Bremsdruck über den Sollbremsdruck hinaus zu erhöhen. Ein differentielles Ventil ersetzend, kann somit der größere von beiden Drücken der Bremse bzw. einem vorgeschalteten ABS-Ventil zugeleitet werden. Das ABS-Ventil kann ein separat angeordnetes Standardventil sein, wie es in vielen Varianten und technische ausgereift erhältlich ist. Wenn das Magnetventil aufgrund der Antriebsschlupfregelung bzw. um ein Durchdrehen von Rädern zu verhindern einen erhöhten Druck aufgebaut hat, kann dieser Druck über das ABS-Ventil wieder reduziert werden.

Der 1-fach-Magnetventilblock ist bevorzugt wie der beschriebene 3-fach-Magnetventilblock ausgebildet, wobei anstelle eines zweiten und dritten Ventils ein Dummy-Körper eingesetzt sein kann. Alternativ können Aussparungen für ein zweites und drittes Ventil im Ventilblock ausgespritzt sein.

Bei einer dritten Ausführungsform dieser zweiten Variante der Ventileinrichtung ist die Ventileinrichtung als Relaisventilausgebildet. Der Bremsdruck wird somit rein pneumatisch gemäß dem Sollbremsdruck ausgesteuert. Ein elektropneumatisches Eingreifen ist bei dieser Ausführungsform bevorzugt nicht vorgesehen. Bevorzugt weist daher das Relaisventil auch keinen Ventilblock gemäß den beiden anderen Ausführungsformen auf. Alternativ kann das Relaisventil jedoch auch mit einem äußerlich im Wesentlichen gleichartig ausgebildeten Ventilblock bzw. mit Abmessungen des Ventilblocks wie der 1-fach-Magnetventilblock und/oder 3-fach-Magnetventilblock ausgestattet sein, wobei dieser Ventilblock bevorzugt jedoch keine Magnetventile, sondern wenigstens ein rein pneumatisch betätigbares Ventil aufweist.

Bevorzugt weisen die Ventileinrichtungen in allen Ausführungsformen ein gleiches Gehäuse auf, wobei in dem Gehäuse Luftkanäle angeordnet sind, die in Abhängigkeit von der jeweiligen Bestückung der Ventileinrichtung mit wenigstens einer Ventilpatrone oder wenigstens einem Ventilblock unterschiedlich schaltbar oder geschaltet sind. Die Ventilpatrone bzw. der Ventilblock sind dabei vorzugsweise eine Magnetventilpatrone bzw. ein Magnetventilblock und weisen somit jeweils wenigstens ein Magnetventil auf. Als alternativ oder zusätzlich weist der Ventilblock wenigstens einen Ventilersatzkörper auf, der anstelle eines Ventils einen zur Aufnahme eines Ventils geeigneten Raum einnimmt, jedoch nicht schaltbar ist. Ggf. ist ein derartiger Raum im Ventilblock auch mit einer Spritzmasse bzw. Vergussmasse ausgespritzt, wobei ggf. Aussparungen für eine Luftführung durch den Ventilersatzkörper verbleiben.

Die Ventileinrichtung ist insbesondere dadurch unterschiedlich schaltbar bzw. geschaltet, dass die Luftkanäle pneumatisch unterschiedlich miteinander verbindbar oder verbunden sind.

Vorzugsweise weisen die Ausführungsformen beider Varianten bzw. wenigstens einer Ausführungsform jeder der beiden Varianten somit ein gleiches Gehäuse mit gleichen Bohrungen bzw. Druckmittelkanälen auf, wobei unterschiedliche Luftwege durch unterschiedliche Magnetventilblöcke bzw. Vorsteuereinheiten und/oder unterschiedliche Ventilpatronen bzw. Ventile erreicht werden.

Dabei werden vorzugsweise je nach Bestückung mit Magnetventilpatronen bzw. Magnetventilblöcken Luftwege im Gehäuse der Ventileinrichtung unterschiedlich geschaltet. Somit können die Gehäusekosten günstig in großen Stückzahlen für beide Varianten produziert werden.

Der Ventilblock bzw. die Magnetventilpatrone bzw. das darin angeordnete Ventil ist bevorzugt, insbesondere mit einer aushärtenden Kunststoffspritzmasse, umspritzt. Dadurch werden Elemente des Ventilblocks, der Magnetventilpatrone bzw. des Ventils auf kostengünstige Weise dauerhaft relativ zueinander fixiert.

Das System weist bevorzugt eine oder mehrere weitere Austauschkomponenten mit jeweils wenigstens zwei Varianten auf. Die weiteren Austauschkomponenten sind die Bremsbetätigungseinrichtung und/oder eine Anhängersteuerventileinrichtung und/oder eine Einrichtung zur Steuerung bzw. ein elektronisches Steuergerät.

Bevorzugt weist eine erste Variante der Bremsbetätigungseinrichtung einen Bremswertgeber auf. Die erste Variante der Bremsbetätigungseinrichtung, eine erste Variante der Anhängersteuerventileinrichtung, eine erste Variante der Einrichtung zur Steuerung und die erste Variante der Ventileinrichtung sind derart ausgebildet, dass sie in der elektronisch geregelten Ausführung der Bremsanlage bzw. in der Ausführung als EBS-Bremsanlage, insbesondere zusammen, eingesetzt werden können.

Eine zweite Variante der Bremsbetätigungseinrichtung weist hingegen ein Bremsventil, jedoch keinen Bremswertgeber auf. Diese zweite Variante der Bremsbetätigungseinrichtung und/oder eine zweite Variante der Anhängersteuerventileinrichtung und/oder eine zweite Variante der Einrichtung zur Steuerung und/oder die zweite Variante der Ventileinrichtung sind derart ausgebildet, dass sie, insbesondere zusammen, in der pneumatisch gesteuerten Ausführung der Bremsanlage bzw. in der ABS-Bremsanlage und/oder in einer rein pneumatischen Bremsanlage, ggf. ohne Antiblockierfunktion, eingesetzt werden können.

Zum Umrüsten einer Bremsanlage können somit bei wenigstens einer Austauschkomponente des Systems, bevorzugt jedoch bei mehreren Austauschkomponenten, die jeweiligen Varianten gegeneinander ausgetauscht werden.

Vorzugsweise weisen die Varianten der Austauschkomponenten, insbesondere die Varianten der Bremsbetätigungseinrichtung und/oder der Ventileinrichtung und/oder der Anhängersteuerventileinrichtung und/oder der Einrichtung zur Steuerung gleich zueinander ausgebildete und gleich zueinander an einer jeweiligen Variante relativ zueinander angeordnete mechanische Befestigungsstellen auf. Alternativ oder zusätzlich weisen die Varianten einer Austauschkomponente oder mehrerer Austauschkomponenten jeweils zueinander gleiche elektrische Schnittstellen auf. Ferner weisen die Varianten der Bremsbetätigungseinrichtung und/oder der Ventileinrichtung und/oder der Anhängersteuerventileinrichtung bevorzugt jeweils zueinander gleiche pneumatische Schnittstellen auf.

Unter gleichen elektrischen Schnittstellen sind jegliche erste Kontaktmittel zu verstehen, die mechanisch mit einem selben zweiten Kontaktmittel verbindbar sind, wobei im mechanisch verbundenen Zustand wenigstens eine elektrische Verbindung zwischen dem ersten und dem zweiten Kontaktmittel besteht. Beispielsweise ist das erste Kontaktmittel eine Steckkupplung und das zweite Kontaktmittel ein Stecker eines Kabels. Dabei können elektrische Kontaktstellen bzw. eine Pinbelegung der elektrischen Schnittstellen in den einzelnen Varianten der Austauschkomponenten unterschiedlich sein. Das Kabel kann entsprechend Leiter aufweisen, die beispielsweise lediglich für ein EBS-Bremssystem oder lediglich für ein ABS-Bremssystem oder lediglich für ein rein pneumatisches Bremssystem verwendet werden. In diesem Fall können gleiche Kabel für unterschiedliche Bremssysteme verwendet werden. Alternativ ist jedoch auch der Einsatz unterschiedlicher Kabel bzw. Kabelbäume möglich.

Die Varianten bzw. einzelne Varianten einzelner dieser Austauschkomponenten können alternativ die gleichen mechanischen Befestigungsstellen bzw. pneumatischen und/oder elektrischen Schnittstellen aufweisen, wohingegen die mechanischen Befestigungsstellen bzw. die pneumatischen und/oder elektrischen Schnittstellen anderer einzelner Austauschkomponenten auch unterschiedlich ausgebildet sein können.

Durch die gleiche Ausbildung der mechanischen Befestigungsstellen bzw. der pneumatischen und/oder elektrischen Schnittstellen lässt sich ein komplettes EBS-Bremssystem einfach und kostengünstig durch Austausch der Austauschkomponenten in ein ABS-Bremssystem oder ein rein pneumatisches Bremssystem umrüsten. Auch Umrüstungen zwischen anderen Bremssystemen, die eine gleiche oder unterschiedliche Funktionalität zueinander aufweisen und ggf. auch eine von der EBS-Bremsanlage und der ABS-Bremsanlage abweichende Funktionalität aufweisen können, sind mittels der Erfindung leicht möglich.

Die Bremsbetätigungseinrichtung weist bevorzugt in der Ausführung als erste Variante einen Bremswertgeber auf und ist für den Einsatz in der elektronisch geregelten Ausführung der Bremsanlage bzw. für den Einsatz in der Bremsanlage mit dem EBS-Bremssystem geeignet. Bevorzugt weist die Bremsbetätigungseinrichtung eine elektrische Schnittstelle sowie pneumatische Anschlüsse auf. In einer Weiterbildung ist auch eine Steuereinrichtung bzw. Steuerelektronik, insbesondere die Einrichtung zur Steuerung, an dem Bremswertgeber angeordnet.

In einer Ausführung als zweite Variante der Bremsbetätigungseinrichtung weist diese Bremsbetätigungseinrichtung bevorzugt ein Bremsventil auf, ist für den Einsatz in der pneumatisch gesteuerten Ausführung der Bremsanlage bzw. für den Einsatz in der Bremsanlage mit dem ABS-Bremssystem oder dem rein pneumatischen Bremssystem geeignet und weist pneumatische Anschlüsse auf. Die zweite Variante der Bremsbetätigungseinrichtung weist bevorzugt keine Einrichtung zur Steuerung und in einer besonderen Ausführung überhaupt keine Elektronik auf. In einer anderen Ausführung ist an dem Bremsventil ein Drucksensor zum Ermitteln eines ausgesteuerten Sollbremsdrucks sowie ein elektrischer Anschluss zur Übermittlung des sensierten Sollbremsdrucks am Bremsventil vorgesehen.

Bevorzugt weisen alle Varianten der Bremsbetätigungseinrichtung gleich ausgebildete Gehäuse auf. Die Varianten können deshalb mit geringem Aufwand gegeneinander ausgetauscht werden.

Auch die Anhängersteuerventileinrichtung ist in einer ersten Variante derart ausgebildet, dass sie für den Einsatz in der elektronisch geregelten Ausführung der Bremsanlage geeignet ist. In der zweiten Variante ist sie hingegen derart ausgebildet, dass sie für den Einsatz in der pneumatisch gesteuerten Ausführung der Bremsanlage geeignet ist. Insbesondere kann bei der ersten Variante der Anhängersteuerventileinrichtung ein Anhängerbremsdruck elektronisch überwacht werden.

Auch die Einrichtung zur Steuerung bzw. das elektronische Steuergerät ist in der ersten Variante für den Einsatz in der elektronisch geregelten Ausführung der Bremsanlage geeignet. In der zweiten Variante ist die Einrichtung zur Steuerung hingegen für den Einsatz in der pneumatischen Ausführung der Bremsanlage ausgebildet. Bevorzugt weisen beide Varianten der Einrichtung zur Steuerung ein zumindest äußerlich gleiches Gehäuse auf. In diesem Fall können sie besonders problemlos gegeneinander ausgetauscht werden. Innerlich können die Einrichtungen zur Steuerung unterschiedlich, alternativ jedoch ebenfalls gleich oder im Wesentlichen gleich ausgebildet sein. Ggf. können sich die Steuerungen, insbesondere nur, durch- eine unterschiedliche Software bzw. einen unterschiedlichen Betriebsmodus voneinander unterscheiden. Ggf. kann in diesem Fall auf einen Austausch der Einrichtung zur Steuerung bei der Umrüstung bspw. von einer EBS-Bremsanlage auf eine ABS-Bremsanlage verzichtet werden, indem bspw. nur eine andere Software auf die Einrichtung zur Steuerung gespielt wird oder ein anderer Betriebsmodus aktiviert wird.

Das System weist bevorzugt Halterungen und/oder Rohre bzw. Schläuche und/oder Kabel bzw. Kabelbäume als Systemkomponenten auf. Diese Systemkomponenten sind, insbesondere im Gegensatz zu den Austauschkomponenten, sowohl für den Einsatz in der elektronisch geregelten Ausführung der Bremsanlage als auch für den Einsatz in der pneumatisch gesteuerten Ausführung der Bremsanlage geeignet. Die Installation von Kabeln, Rohren und Schläuchen kann somit auch bei einem Austausch der Austauschkomponenten beibehalten bzw. mit geringem Aufwand angepasst, erweitert oder reduziert werden. Alle Varianten der Austauschkomponenten weisen bevorzugt gleich ausgebildete Befestigungsstellen und/oder pneumatische und/oder elektrische Schnittstellen zum Anschluss dieser Halterungen, Rohre, Schläuche und Kabel bzw. Kabelbäume auf. Insbesondere weisen die Befestigungsstellen Aussparungen und/oder Löcher, insbesondere Gewindelöcher, auf. Die pneumatischen Schnittstellen weisen bevorzugt Anschlüsse für die Rohre bzw. Schläuche auf. Die elektrischen Schnittstellen weisen bevorzugt Steckkupplungen und/oder Stecker oder andere elektrische Kontakte auf.

In einer Ausführung der Erfindung weist das System Komponenten einer Bremsanlage auf, die bekannte Standardkomponenten sein können, jedoch um mit den Komponenten mechanisch und/oder pneumatisch und/oder elektrisch verbundene Adapter erweitert sind. So kann bspw. eine bekannte Komponente einer Bremsanlage, bspw. eine bekannte Ventileinrichtung einer ABS-Bremsanlage mittels eines Adapters derart weitergebildet werden, dass bspw. der Adapter die gleichen Schnittstellen wie die Varianten der Ventileinrichtung des erfindungsgemäßen Systems bereitstellt. In diesem Fall ist auch die Kombination der bekannten Komponenten mit dem entsprechenden Adapter als Austauschkomponente des erfindungsgemäßen Systems zu verstehen.

Ferner betrifft die Erfindung noch eine Bremsanlage für ein Fahrzeug sowie das Fahrzeug jeweils mit wenigstens einer der Austauschkomponenten des erfindungsgemäßen Systems. Schließlich betrifft die Erfindung noch ein Verfahren zum Umrüsten einer Bremsanlage, wobei eine Bremsanlage durch Austausch einer oder mehreren Austauschkomponenten, bspw. von einer EBS-Bremsanlage in eine ABS-Bremsanlage, umgerüstet wird. Dabei können vorhandene Halterungen, Kabelbäume und Verrohrungen weiterhin verwendet werden, so dass das erfindungsgemäße Verfahren zum Umrüsten aufgrund des modularen erfindungsgemäßen Systems technisch einfach und kostengünstig möglich ist.

Weitere Ausführungsformen ergeben sich aus den Ansprüchen sowie aus den anhand der Zeichnung näher erläuterten Ausführungsbeispielen. In der Zeichnung zeigen:
- Fig. 1: Austauschkomponenten eines Systems für eine Bremsanlage eines Fahrzeugs mit mehreren Varianten der Austauschkomponenten gemäß einem Ausführungsbeispiel der Erfindung,
- Fig. 2: eine ein elektronisches Bremssystem aufweisende Bremsanlage eines Fahrzeugs mit Austauschkomponenten des Systems von Fig. 1 gemäß einem Ausführungsbeispiel der Erfindung,
- Fig. 3: die Bremsanlage von Fig. 2 ohne das elektronische Bremssystem mit alternativen Varianten der Austauschkomponenten des Systems von Fig. 1 gemäß einem Ausführungsbeispiel der Erfindung,
- Fig. 4: eine erste Variante der Ventileinrichtung des Systems von Fig. 1 mit einem ersten Typ eines Ventilblocks,
- Fig. 5: eine zweite Variante der Ventileinrichtung des Systems von Fig. 1 mit einem zweiten Typ eines Ventilblocks und
- Fig. 6: eine weitere zweite Variante der Ventileinrichtung des Systems von Fig. 1 mit dem Gehäuse der Ventileinrichtung von Fig. 5 und mit einem dritten Typ eines Ventilblocks.

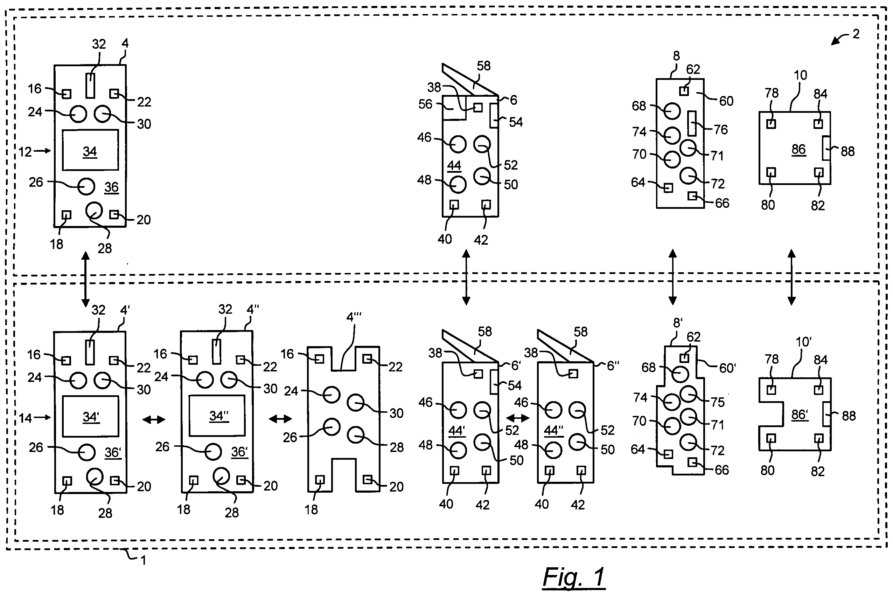

Fig. 1 zeigt ein System 1 für eine pneumatisch betriebene Bremsanlage. Das System 1 ist modular aufgebaut, insbesondere als Baukastensystem, und weist mehrere Austauschkomponenten 2 auf. Die Austauschkomponenten 2 sind eine Ventileinrichtung 4, eine Bremsbetätigungseinrichtung 6, eine Anhängersteuerventileinrichtung 8 und eine Einrichtung zur Steuerung 10. Von diesen Austauschkomponenten 2 weist das System jeweils wenigstens eine erste Variante 12 und wenigstens eine zweite Variante 14 auf. Die ersten und die zweiten Varianten 12 und 14 jeder Austauschkomponente 2 können jeweils alternativ in der Bremsanlage verbaut sein bzw. werden.

Bspw. kann die Bremsanlage zunächst alle Austauschkomponenten 2 in der ersten Variante 12 aufweisen. Alle oder einzelne der Austauschkomponenten 2 können bspw. für einen Wechsel des Bremssystems gegen jeweils eine zweite Variante 14 der jeweiligen Austauschkomponente 2 ausgetauscht werden. Auch ein Austausch gleichartig oder identisch ausgebildeter Varianten 12 bzw. 14 gegeneinander oder der Austausch einer zweiten Variante 14 gegen eine andere zweite Variante 14 einer Austauschkomponente 2 ist mit der Erfindung aufgrund der Modularität des Systems 1 problemlos möglich. Ggf. wird eine Austauschkomponente 2 durch mehr als eine Austauschkomponente 2 sowie ggf. weitere Komponenten des Systems 1 ersetzt. Auch kann es sein, dass eine Austauschkomponente 2 oder mehrere Austauschkomponenten 2 durch lediglich eine Austauschkomponente 2 ersetzt werden und ggf. zusätzlich weitere Komponenten der Bremsanlage entfallen können.

Die ersten Varianten 12 der Austauschkomponente 2 sind für den Einsatz in einer elektronisch geregelten Ausführung der Bremsanlage, d.h. einer Bremsanlage mit einem sog. EBS-Bremssystem ausgebildet bzw. geeignet. Die zweiten Varianten 14 der Austauschkomponente 2 sind demgegenüber für den Einsatz in einer pneumatisch gesteuerten Ausführung der Bremsanlage, bspw. für den Einsatz in einer Bremsanlage mit einem sog. ABS-Bremssystem ausgebildet bzw. für diesen Einsatz geeignet. Insbesondere sind einzelne oder alle der zweiten Varianten 14 der Austauschkomponenten 2 nicht für den Einsatz in einer EBS-Bremsanlage geeignet.

Die Varianten 12 und 14 der Austauschkomponenten 2 weisen jeweils gleich zueinander ausgebildete und gleich zueinander an der jeweiligen Variante 12, 14 relativ zueinander angeordnete mechanische Befestigungsstellen auf. Insbesondere weist die Ventileinrichtung 4 mechanische Befestigungsstellen 16, 18, 20 und 22 an ihrer ersten Variante 12 auf. Die zweiten Varianten 14 der Ventileinrichtung 4, nämlich Ventileinrichtungen 4', 4" und 4"', weisen gegenüber der ersten Variante 12 jeweils die gleichen mechanischen Befestigungsstellen 16 bis 22 auf. Dabei ist die Anordnung der Befestigungsstellen 16 bis 22 an der Ventileinrichtung 4 relativ zueinander gleich ihrer Anordnung relativ zueinander an der Ventileinrichtung 4', 4" sowie 4"'. Somit ist es möglich, die Ventileinrichtungen 4, 4', 4" und 4'" bzw. die unterschiedlichen Varianten 12 und 14 einer Austauschkomponente 2 an gleichen Rahmenteilen, Halterungen oder anderen Aufnahmemitteln mechanisch zu befestigen. Bspw. kann es sich bei den mechanischen Befestigungsstellen 16 bis 22 um Aussparungen oder Löcher bzw. Bohrlöcher mit oder ohne Gewinde handeln, so dass die Austauschkomponenten 2 mittels Schrauben bspw. an einem Fahrzeugrahmen festgeschraubt werden können.

Die Ventileinrichtung 4 weist darüber hinaus pneumatische Schnittstellen 24, 26, 28 und 30 auf. Jede pneumatische Schnittstelle 24 bis 30 ist für das Zuführen und/oder Ablassen von Druckluft geeignet. Sofern bspw. eine Schnittstelle 24 bis 30 nicht direkt Druckluft an die Umgebung entlüftet, kann sie mit einem Rohr, Schlauch oder einem anderen druckluftfördernden Mittel pneumatisch verbunden werden. Die Ventileinrichtungen 4', 4" und 4'" weisen die gleichen pneumatischen Schnittstellen 24 bis 30 auf. Die Anordnung der Schnittstellen 24 bis 30 relativ zueinander ist bei den unterschiedlich ausgebildeten Ventileinrichtungen 4 bis 4'" bzw. Varianten 12 und 14 der Ventileinrichtungen 4 bis 4'" bevorzugt gleich, kann jedoch auch unterschiedlich sein. Im gezeigten Ausführungsbeispiel sind die Schnittstellen 24 bis 30 an der Ventileinrichtung 4 relativ zueinander wie diese Schnittstellen 24 bis 30 an der Ventileinrichtung 4' bzw. 4" relativ zueinander angeordnet. Die Anordnung der Schnittstellen 24 bis 30 an der Ventileinrichtung 4'" relativ zueinander weicht demgegenüber hiervon ab.

Die pneumatische Schnittstelle 24 der zweiten Varianten 14 der Ventileinrichtung 4 bzw. der Ventileinrichtung 4', 4" bzw. 4'" ist ein Eingang für einen pneumatisch bspw. mittels eines Bremspedals erzeugten Sollbremsdruck. Beim EBS-Bremssystem bzw. bei der ersten Variante 12 der Ventileinrichtung 4 wird dieser Sollbremsdruck als Redundanzdruck über die pneumatische Schnittstelle 24 der Ventileinrichtung 4 zugeführt.

Die pneumatische Schnittstelle 30 ist zur pneumatischen Verbindung mit wenigstens einer Bremse des die Bremsanlage mit Austauschkomponenten 2 des Systems 1 aufweisenden Fahrzeugs vorgesehen. Die erste Variante 12 der Ventileinrichtung 4 steuert den an dieser pneumatischen Schnittstelle 30 bereitgestellten Bremsdruck vorzugsweise elektropneumatisch bzw. mittels wenigstens eines Magnetventils aus. Im Falle eines Ausfalls der elektropneumatischen Aussteuerbarkeit bzw. eines elektrischen Ausfalls des EBS-Bremssystems der Bremsanlage wird dieser Bremsdruck gemäß dem Redundanzdruck pneumatisch ausgesteuert. Auch die zweiten Varianten 14 der Ventileinrichtung 4 bzw. die Ventileinrichtungen 4', 4" und 4'" steuern den Bremsdruck pneumatisch gemäß dem Sollbremsdruck aus und stellen ihn an der pneumatischen Schnittstelle 30 bereit.

Die pneumatische Schnittstelle 26 bzw. 28 ist jeweils zur pneumatischen Verbindung mit einem Druckluftvorrat bzw. mit einer Entlüftung vorgesehen. Die Schnittstelle 28 bzw. eine pneumatische Verbindung zur Entlüftung kann bei der Ventileinrichtung 4" auch entfallen, da die Entlüftung in diesem Fall mittels eines nachgeschalteten ABS-Ventils erfolgt.

Die Ventileinrichtungen 4, 4' und 4" weisen zur elektrischen Ansteuerung jeweils wenigstens eines hier nicht dargestellten Magnetventils und/oder zum elektrischen Anschluss eines nicht dargestellten Drucksensors eine gleich ausgebildete elektrische Schnittstelle 32 auf. Insbesondere weisen die elektrischen Schnittstellen 32 gleiche Steckkupplungen bzw. Stecker auf, so dass ein am Fahrzeugrahmen verlegtes Kabel mittels der elektrischen Schnittstelle 32 an der Ventileinrichtung 4 oder alternativ mit der Ventileinrichtung 4' bzw. 4" elektrisch verbunden werden kann.

Die Ventileinrichtungen 4, 4' und 4" weisen ferner einen jeweils wenigstens ein Magnetventil aufweisenden Ventilblock 34, 34' bzw. 34" auf. Diese Ventilblöcke 34 bis 34" sind zumindest äußerlich vorzugsweise derartig gleich oder ähnlich ausgebildet, dass sie mechanisch an bzw. in jedem Gehäuse 36 oder 36' oder einer Gruppe von Gehäusen der Ventileinrichtungen 4 bis 4" befestigt werden könnten. Auch die Gehäuse 36 und 36' sind bzgl. mechanischer Schnittstellen zum Ventilblock 34 bis 34" entsprechend gleich oder ähnlich ausgebildet. Dies hat fertigungstechnische Vorteile. Vorzugsweise sind auch elektrische und/oder pneumatische Schnittstellen zwischen einem der Gehäuse 36 und 36' und dem jeweils zugehörigen Ventilblock 34 bis 34" gleichartig ausgebildet.

Somit kann es ausreichen, um unterschiedliche Ausgestaltungen der Bremsanlage zu erhalten, die Ventilblöcke 34 bis 34" mit unterschiedlichen Ventilen zu bestücken und ggf. weitere unterschiedliche Ausgestaltungen im Inneren der Ventilblöcke 34 bis 34" vorzusehen. Äußerlich können die Ventilblöcke 34 bis 34" jedoch gleich zueinander ausgebildet sein. Die Gehäuse 36 bis 36' der Ventileinrichtungen 4 bis 4" sind vorzugsweise an die unterschiedliche Funktionsweise der Ventilblöcke 34 bis 34" durch unterschiedliche Luftführungen bzw. Bohrungen in den Gehäusen 36 bis 36' angepasst, so dass bspw. die pneumatische Schnittstelle 26 an der Ventileinrichtung 4 gegenüber der pneumatischen Schnittstelle 26 an der Ventileinrichtung 4' über eine unterschiedliche Schnittstelle zwischen dem Gehäuse 36 bzw. 36' und dem Ventilblock 34 bzw. 34' mit diesem Ventilblock 34 bzw. 34' pneumatisch verbunden werden kann. Ggf. kann dadurch eine pneumatische Verbindung zu einem anderen Ventil oder einem anderen Eingang eines gleichen Ventils beim Ventilblock 34 gegenüber dem Ventilblock 34' erreicht werden.

Die Ventileinrichtungen 4, 4' und 4" sind als Modulator ausgebildet und können dabei als Achsmodulator zur Aussteuerung von Bremsen an mehreren Rädern einer Achse oder als Radmodulator zur Aussteuerung des Bremsdrucks an Bremsen einzelner Räder bzw. einzelner Seiten einer Achse eingesetzt werden. Die Ventileinrichtung 4'" ist hingegen als Relaisventil ausgebildet und wird bevorzugt zur pneumatischen Aussteuerung des Bremsdrucks für Bremsen an Rädern einer Achse eingesetzt. Ggf. sind den einzelnen Bremsen der Räder ABS-Ventile vorgeschaltet, die im Falle einer Blockierneigung des jeweiligen Rades elektropneumatisch den Bremsdruck auf einen gegenüber dem vom Relaisventil ausgesteuerten Bremsdruck niedrigeren Druck begrenzen oder erniedrigen können.

Die Bremsbetätigungseinrichtung 6 als weitere Austauschkomponente 2 des Systems 1 weist ebenfalls bei der ersten Variante 12 gegenüber der zweiten Variante 14 bzw. gegenüber der Bremsbetätigungseinrichtung 6' bzw. 6" gleiche bzw. gleich ausgebildete mechanische Befestigungsstellen 38 bzw. 40' bzw. 42 auf, die überdies gleich zueinander an der jeweiligen Bremsbetätigungseinrichtung 6, 6' angeordnet sind. Insbesondere sind Gehäuse 44, 44' und 44" der Bremsbetätigungseinrichtungen 6, 6' und 6" im Wesentlichen gleich oder zumindest ähnlich zueinander ausgebildet. Zudem weisen die Bremsbetätigungseinrichtungen 6, 6' und 6" gleiche pneumatische Schnittstellen 46, 48, 50 und 52 auf, so dass sie mit gleichen Druckluftschläuchen bzw. Druckluftleitungen pneumatisch verbunden werden können.

Die Bremsbetätigungseinrichtungen 6 und 6' weisen zudem bevorzugt eine gleiche elektrische Schnittstelle 54 auf. Bei der ersten Variante bzw. EBS-Variante der Bremsbetätigungseinrichtung 6 ist die elektrische Schnittstelle 54 elektrisch mit einer Signalaufbereitungselektronik 56 verbunden. Die Bremsbetätigungseinrichtung 6 weist nämlich in diesem Fall einen Bremswertgeber auf, der in Erwiderung auf eine Betätigung eines Bremspedals 58 einen Verzögerungswunsch elektronisch, insbesondere mittels eines Hall-Sensors oder Tasters, erfasst, der nach elektronischer Signalaufbereitung über die elektrische Schnittstelle 54 an die Einrichtung zur Steuerung 10 bzw. an die Ventileinrichtung 4 weitergeleitet wird. Zusätzlich wird der Redundanzdruck direkt pneumatisch erzeugt, wobei zwei der pneumatischen Schnittstellen 46 bis 52 zur Verbindung mit dem Druckluftvorrat von zwei Bremskreisen dienen. Die beiden anderen pneumatischen Schnittstellen 46 bis 54 stellen jeweils den Redundanzdruck für einen der beiden Bremskreise bereit.

Analog zur Aussteuerung des Redundanzdrucks wird pneumatisch der Sollbremsdruck in den ein Bremsventil, jedoch keinen Bremswertgeber aufweisenden Bremsbetätigungseinrichtungen 6' und 6" ausgesteuert und bereitgestellt. Die elektrische Schnittstelle 54 bei der Bremsbetätigungseinrichtung 6' ermöglicht zusätzlich den Anschluss eines nicht dargestellten Drucksensors, der den ausgesteuerten Sollbremsdruck in der Bremsbetätigungseinrichtung 6' erfasst, wenn dieser Sollbremsdruck mittels Betätigung des Bremspedals 58 pneumatisch erzeugt wird. Bei einer Betätigung des Bremspedals 58 der Bremsbetätigungseinrichtung 6" wird der ausgesteuerte Sollbremsdruck ggf. an anderer Stelle der Bremsanlage, bspw. in der Ventileinrichtung 4' bzw. 4" gemessen.

Die Anhängersteuerventileinrichtung 8 als erste Variante 12 weist in dem hier gezeigten Ausführungsbeispiel ein zur zweiten Variante 14 bzw. zu einer Anhängersteuerventileinrichtung 8' unterschiedlich ausgebildetes Gehäuse 60 gegenüber einem Gehäuse 60' der zweiten Variante 14 auf. Dennoch weisen beiden Gehäuse 60 und 60' jeweils gleich bzw. gleich ausgebildete mechanische Befestigungsstellen 62 bzw. 64 bzw. 66 auf, wobei die mechanischen Befestigungsstellen 62 bis 66 am Gehäuse 60 relativ zueinander so wie die mechanischen Schnittstellen 62 bis 66 am Gehäuse 60' relativ zueinander angeordnet sind. Alternativ können die Gehäuse 60 und 60' jedoch auch gleich zueinander ausgebildet sein.

Die Anhängersteuerventileinrichtungen 8 und 8' weisen zudem gleiche pneumatische Schnittstellen 68 bzw. 70 bzw. 71 bzw. 72 bzw. 74 auf, über welche einem Anhänger von der Bremsanlage ein Betriebsbremsdruck sowie ein Feststellbremsdruck für eine Feststellbremse bereitgestellt werden kann. Die Anhängersteuerventileinrichtung 8' weist zusätzlich eine weitere pneumatische Schnittstelle 75 auf. Die erste Variante 12 der Anhängersteuerventileinrichtung 8 weist ferner eine elektrische Schnittstelle 76 auf, über die ggf. elektropneumatisch eine Veränderung des Betriebsbremsdrucks und/oder Feststellbremsdrucks für den Anhänger beeinflusst werden kann und/oder über die zumindest ein Drucksensor zum Messen wenigstens einer dieser beiden Drücke bereitgestellt werden kann und/oder über die die Anhängersteuerventileinrichtung 8 elektrisch angesteuert und/oder überwacht werden kann.

Die Einrichtung zur Steuerung 10 bzw. 10' ist bevorzugt eine Steuereinrichtung bzw. eine Elektronik, die Steuerfunktionen wahrnimmt. In dem gezeigten Ausführungsbeispiel weisen die Einrichtungen zur Steuerung 10 und 10' bzw. die erste und die zweite Variante 12, 14 gleiche bzw. jeweils gleich ausgebildete mechanische Befestigungsstellen 78 bzw. 80 bzw. 82 bzw. 84 auf, obwohl ein Gehäuse 86 der Einrichtung zur Steuerung 10 unterschiedlich zu einem Gehäuse 86' der Einrichtung zur Steuerung 10' ausgebildet ist. Wie schon bei den übrigen Austauschkomponenten 2 sind auch hier die mechanischen Befestigungsstellen 78 bis 84 an der Steuereinrichtung 10 relativ zueinander wie diese mechanischen Befestigungsstellen 78 bis 84 an der Steuereinrichtung 10' relativ zueinander angeordnet, so dass mechanisch ein einfacher Austausch der Einrichtung zur Steuerung 10 gegen die Einrichtung zur Steuerung 10' möglich ist. Auch elektrisch muss lediglich bspw. mittels einer Steckverbindung die Verbindung zu einem Kabel oder zu einer Vielzahl von Kabeln bzw. einem Kabelbaum über eine gleiche elektrische Schnittstelle 88, die jedoch unterschiedliche elektrische Kontakte beispielsweise in einem äußerlich gleich ausgebildeten Stecker oder einer äußerlich gleich ausgebildeten Steckkupplung aufweisen kann, hergestellt werden. Gleiche elektrische Schnittstellen 88 an den Steuereinrichtungen 10 und 10' ermöglichen dabei beispielsweise einen Austausch der Einrichtungen zur Steuerung 10 und 10' gegeneinander, ohne die Kabel bzw. Kabelbäume am Fahrzeug mit austauschen zu müssen.

Die Darstellungen der Austauschkomponenten 2 sind lediglich beispielhaft zu verstehen. Die Austauschkomponenten 2 sind stark vereinfacht dargestellt. Insbesondere sind die mechanischen Befestigungsstellen, pneumatischen Schnittstellen und elektrischen Schnittstellen lediglich symbolhaft als Kreise, Quadrate bzw. Rechtecke dargestellt, wobei ihre tatsächliche Ausgestaltung in der Regel hiervon abweichen dürfte. Auch die Anzahl der Schnittstellen und ihre Anordnung an dem jeweiligen Gehäuse dürfte in der Regel vom lediglich zur Veranschaulichung der Erfindung dienenden Ausführungsbeispiel abweichen. In jedem Fall können die erste Variante und die zweiten Varianten der Austauschkomponenten 2 jeweils problemlos gegeneinander ausgetauscht werden, um bspw. ein EBS-Bremssystem gegen ein ABS-Bremssystem oder ein rein pneumatisches Bremssystem ohne Antiblockierfunktion auszutauschen. Auch bei der Erstausrüstung eines Fahrzeugs kann eine zumindest weitgehend identische Verrohrung mit pneumatischen Rohren bzw. Druckluftleitungen, identischen mechanischen Befestigungsstellen und identischer elektrischer Verkabelung vorgesehen werden, wobei für die unterschiedlichen Bremssysteme bevorzugt lediglich unterschiedliche Austauschkomponenten verbaut werden müssen.

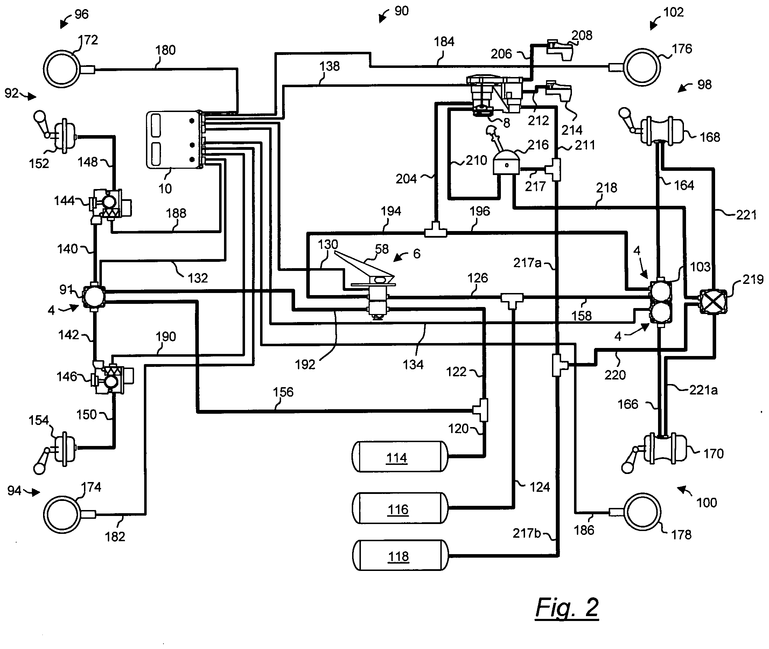

Fig. 2 zeigt eine Bremsanlage 90 gemäß einem Ausführungsbeispiel der Erfindung in einer Ausbildung als EBS-Bremssystem. Die Bremsanlage 90 weist die ersten Varianten 12 der Austauschkomponenten 2 des Systems 1 von Fig. 1 auf. Insbesondere weist die Bremsanlage 90 dreimal die als Modulator ausgebildete Ventileinrichtung 4 auf, nämlich einmal in einer Ausbildung als 1-Kanal- Achsmodulator 91 zum Betätigen von Bremsen 92 und 94 an einer Vorderachse 96 eines Fahrzeugs, das die Bremsanlage 90 aufweist. Weitere Ventileinrichtungen 4 sind als Radmodulatoren jeweils für eine Bremse 98 bzw. 100 an einer Hinterachse 102 des Fahrzeugs vorgesehen und in einem 2-Kanal-Achsmodulator 103 zusammengefasst. Darüber hinaus weist die Bremsanlage 90 die einen Bremswertgeber aufweisende Bremsbetätigungseinrichtung 6 mit dem Bremspedal 58, die Anhängersteuerventileinrichtung 8 und die als Steuereinheit ausgebildete Einrichtung zur Steuerung 10 auf.

Die Einrichtung zur Steuerung 10 nimmt zentrale Steuerfunktionen des elektronischen Bremssystems war, so dass sie zugleich eine Zentrale des elektronischen Bremssystems ist. Die Einrichtung zur Steuerung 10 und alle weiteren elektrischen und elektronischen Komponenten der Bremsanlage 90 werden von wenigstens einer nicht dargestellten Fahrzeugbatterie mit elektrischer Energie versorgt.

Die Bremsanlage 90 ist mit drei Bremskreisen aufgebaut, die von drei Druckluftvorratsbehältern 114, 116 und 118 gespeist werden und ihrerseits Druckluft von wenigstens einem nicht dargestellten Kompressorvorzugsweise nach Aufbereitung in einer Druckluftaufbereitungseinrichtung und vorzugsweise über ein Vierkreisschutzventil erhalten. Vornehmlich können mittels des ersten Bremskreises die Bremsen 92 und 94 an der Vorderachse 96 und mittels des zweiten Bremskreises die Bremsen 98 und 100 an der Hinterachse 102 des Fahrzeugs sowie nicht dargestellte Bremsen eines angehängten Anhängers betätigt werden. Ein vom Druckluftvorratsbehälter 118 gespeister dritter Bremskreis ist zum Betrieb, insbesondere Lösen, einer Feststellbremse vorgesehen.

Druckluft aus den Druckluftvorratsbehältern 114 und 116 wird über Druckluftleitungen 120 und 122 bzw. 124 und 126 der Bremspedaleinrichtung 6 bereitgestellt. In Erwiderung auf eine Betätigung des Bremspedals 58 erzeugt die Bremspedaleinrichtung 6 bzw. der Bremswertgeber ein elektrisches Bremsanforderungssignal, welches über die elektrische Schnittstelle 32 gemäß Fig. 1 an eine elektrische Leitung 130 und über diese elektrische Leitung 130 und weiter über die elektrische Schnittstelle 88 an die Einrichtung zur Steuerung 10 geleitet wird. Darüber hinaus steuert die Bremsbetätigungseinrichtung 6 direkt einen Redundanzdruck für die beiden Bremskreise aus und stellt ihn über zwei seiner pneumatischen Schnittstellen 46 bis 52 bereit.

Die Einrichtung zur Steuerung bzw. Steuereinrichtung 10 ist über elektrische Leitungen 132, 134 und 138 mit den Ventileinrichtungen bzw. Modulatoren 4 bzw. mit der Anhängersteuerventileinrichtung 8 elektrisch verbunden. Die Steuereinrichtung 10 kann somit Steuerfunktionen bzw. in Verbindung mit Sensoren Regelfunktionen für die von ihr angesteuerten Komponenten der Bremsanlage 90 bzw. für die Ventileinrichtungen 4 und für die Anhängersteuerventileinrichtung 8 übernehmen.

In Erwiderung auf das Bremsanforderungssignal steuert die Steuereinrichtung 10 die Ventileinrichtungen 4 an, so dass diese Ventileinrichtungen 4 einen Bremsdruck aussteuern, den die Steuereinrichtung 10 nach dem Bremsanforderungssignal und ggf. in Abhängigkeit weiterer Parameter errechnet bzw. auswählt. Drucksensoren in den Ventileinrichtungen 4 messen den ausgesteuerten Bremsdruck, leiten die Messergebnisse über die elektrische Leitung 132 bzw. 134 an die Steuereinrichtung 10 weiter, so dass eine Rückkopplung besteht und der Bremsdruck von der Steuereinrichtung 10 eingeregelt werden kann. Eine Elektronik zum Aussteuern bzw. Einregeln des Bremsdrucks ist somit in der Steuereinrichtung 10 enthalten. Dies hat den Vorteil, dass sowohl die erste Variante 12 als auch die zweiten Varianten 14 der Ventileinrichtung 4, bei denen diese Elektronik nicht benötigt wird, keine Steuerelektronik oder Regelelektronik aufweisen müssen und deshalb sehr ähnlich zueinander ausgebildet sein können. Alternativ kann jedoch auch ein Teil oder die gesamte Elektronik zur Einregelung des Bremsdrucks an der Ventileinrichtung 4 angeordnet sein.

Der von der Ventileinrichtung 4 bzw. dem 1-Kanal-Achsmodulator 91 an der Vorderachse 96 ausgesteuerte Bremsdruck wird über eine Druckluftleitung 140 bzw. 142 zunächst einem sog. ABS-Ventil 144 bzw. 146 für eine Antiblockierfunktion und danach über eine Druckluftleitung 148 bzw. 150 einem Bremszylinder bzw. dem Membranteil eines Bremszylinders 152 bzw. 154 bereitgestellt. Mittels dieser Bremszylinder 152 und 154 können die Bremsen 92 und 94 betätigt werden. Die Druckluft hierfür wird der Ventileinrichtung 4 an der Vorderachse 96 des Fahrzeugs über eine Druckluftleitung 156 aus dem ersten Bremskreis zur Verfügung gestellt.

Eine Druckluftleitung 158 versorgt hingegen die Ventileinrichtungen 4 bzw. den 2-Kanal-Achsmodulator 103 an der Hinterachse 102 des Fahrzeugs mit Druckluft aus dem zweiten Bremskreis. Der analog zur Aussteuerung des Bremsdrucks mittels der Ventileinrichtung 4 an der Vorderachse 96 von den Ventileinrichtungen 4 an der Hinterachse 102 des Fahrzeugs ausgesteuerte Bremsdruck wird über eine Druckluftleitung 164 bzw. 166 einem Membranteil eines kombinierten Federspeicherbremszylinders 168 bzw. 170 bereitgestellt.

Die Bremsanlage 90 stellt darüber hinaus Funktionen eines Antiblockiersystems, einer Antriebsschlupfregelung und einer elektronischen Stabilitätskontrolle bereit. Hierfür werden Drehzahlinformationen der einzelnen Räder des Fahrzeugs während der Fahrt und während des Bremsvorgangs benötigt. Daher weist die Bremsanlage 90 Radsensiermittel 172, 174, 176 und 178 auf, die Raddrehgeschwindigkeiten der einzelnen Räder sensieren und Messwerte bzw. eine Information über die sensierten Raddrehgeschwindigkeiten mittels einer elektrischen Leitung 180, 182, 184 bzw. 186 an die Steuereinrichtung 10 leiten.

Die Antiblockierfunktion soll einer Blockierneigung der Räder entgegen wirken. Bei erkannter Blockierneigung eines Rades an der Hinterachse 102 des Fahrzeugs wird daher die diesem Rad zugeordnete Ventileinrichtung 4 über die elektrische Leitung 134 angesteuert, um die Bremse 98 bzw. 100 zu lösen bzw. um den Membranteil des kombinierten Federspeicherbremszylinders 168 bzw. 170 über die Druckluftleitung 164 bzw. 166 zu entlüften bzw. um den pneumatischen Druck in dem jeweiligen Membranteil zu senken. An der Vorderachse wird hingegen zum Lösen der Bremse 92 bzw. 94 im Falle einer erkannten Blockierneigung das ABS-Ventil 144 bzw. 146 über eine elektrische Leitung 188 bzw. 190 von der Steuereinrichtung 10 angesteuert. In Erwiderung darauf entlüftet das ABS-Ventil 144 bzw. 146 die Druckluftleitung 148 bzw. 150 oder erhöht zumindest den darin vorliegenden Druck nicht weiter.

Auch wenn mittels der elektronischen Stabilitätsfunktion ein drohender oder tatsächlicher Stabilitätsverlust bzw. eine Schleuderneigung des Fahrzeugs festgestellt wird, können die ABS-Ventile 144 und 146 sowie die Ventileinrichtungen 4 an der Hinterachse 102 des Fahrzeugs gezielt angesteuert werden, um, wie für die ABS-Funktion beschrieben, den Druck in den Druckluftleitungen 148, 150, 164 und 166 zu beeinflussen.

Ebenfalls für die elektronische Stabilitätsfunktion sowie zusätzlich zur Antriebsschlupfregelung kann gezielt der Druck in den Druckluftleitungen 148, 150, 164 und 166 erhöht werden. Im Falle der Antriebsschlupfregelung erkennt die Steuereinrichtung 10 mittels der sensierten Raddrehzahlen sowie ggf. mittels weiterer Daten einen Schlupf der Räder und steuert die Ventileinrichtungen 4 daher zum Abbremsen dieser Räder an, um dem Schlupf entgegenzuwirken bzw. um ein Durchdrehen der Räder zu verhindern. An der Hinterachse 102 können dabei beide Räder unabhängig voneinander abgebremst werden. An der Vorderachse 96 ist hingegen die Ventileinrichtung 4 bzw. der 1-Kanal-Achsmodulator 91 für das Abbremsen beider Räder zuständig. Ein simultanes Abbremsen beider Räder an der Vorderachse 96 ist vorteilhaft, um das Fahrzeug trotz des elektronischen Eingriffs lenkbar zu halten. Jedoch können die Bremsen 92 und 94 an den Rädern der Vorderachse 96 aufgrund der ABS-Ventile 144 und 146 auch mit voneinander unterschiedlichen Bremsdrücken beaufschlagt werden. In diesem Ausführungsbeispiel sind zwar zwei Ventileinrichtungen 4 als Radmodulatoren zusammen als der 2-Kanal-Achsmodulator 103 an der Hinterachse 102, jedoch nur eine Ventileinrichtung 4 als der 1-Kanal-Achsmodulator 91 zusammen mit den zwei ABS-Ventilen 144 und 146 an der Vorderachse 96 des Fahrzeugs vorgesehen.

In einem alternativen, nicht gezeigten Ausführungsbeispiel können jedoch auch an der Vorderachse zwei als Radmodulatoren ausgebildete Ventileinrichtungen 4 bzw. ein 2-Kanal-Achsmodulator anstelle der als 1-Kanal-Achsmodulator eingesetzten Ventileinrichtung 4 mit den zwei ABS-Ventilen 144 und 146 vorgesehen werden. In diesem Fall ist es jedoch zweckmäßig, für die Antriebsschlupfregelung bzw. ggf. auch für die elektronische Stabilitätskontrolle die Ventileinrichtungen 4 an der Vorderachse 96 zumindest für die Antriebsschlupfregelung zugleich anzusteuern bzw. einen gleichen Bremsdruck mittels dieser Ventileinrichtungen 4 auszusteuern.

Der Ventileinrichtung 4 an der Vorderachse 96 wird zur pneumatischen Aussteuerung des Bremsdrucks im Redundanzfall der mittels der Bremsbetätigungseinrichtung 6 im ersten Bremskreis ausgesteuerte Redundanzdruck über eine Druckluftleitung 192 zugeleitet. Die Ventileinrichtungen 4 an der Hinterachse 102 erhalten analog über Druckluftleitungen 194 und 196 den ausgesteuerten Redundanzdruck aus dem zweiten Bremskreis. Im Fall eines elektrischen Ausfalls bzw. im Fall eines Elektronikausfalls steuern die Ventileinrichtungen 4 den Bremsdruck in den Druckluftleitungen 148, 150, 164 und 166 rein pneumatisch gemäß dem jeweiligen Redundanzdruck im ersten bzw. zweiten Bremskreis aus, so dass das die Bremsanlage 90 aufweisende Fahrzeug pneumatisch abgebremst werden kann.

Die Bremsanlage 90 steuert darüber hinaus ggf. Bremsen an einem Anhänger an. Über eine Druckluftleitung 204 wird der Redundanzdruck aus dem zweiten Bremskreis über eine der pneumatischen Schnittstellen 68 bis 74 gemäß Fig. 1 mit der Anhängersteuerventileinrichtung 8 verbunden. Über eine andere dieser Schnittstellen 68 bis 74 ist eine weitere Druckluftleitung 206 angeschlossen, die den Redundanzdruck an einen Druckluftanschluss 208 liefert, der mit pneumatischen Systemen des Anhängers verbindbar ist. Über die weiteren drei pneumatischen Schnittstellen 68 bis 74 der Anhängersteuerventileinrichtung 8 sind Druckluftleitungen 210, 211 und 212 angeschlossen. Über die Druckluftleitung 210 kann ein ausgesteuerter und über die Druckluftleitung 211 direkt ein Vorratsluftdruck aus dem dritten Bremskreis bezogen und über die Druckluftleitung 212 an einen Druckluftanschluss 214 zur Verbindung mit Druckluftsystemen des Anhängers bereitgestellt werden. Die Druckluft mit dem ausgesteuerten Luftdruck wird dabei über eine Feststellbremsbetätigungseinrichtung 216 bezogen, die wiederum den Vorratsluftdruck aus dem dritten Bremskreis über Druckluftleitungen 217, 217a und 217b bezieht. Eine elektrische Ansteuerung und Überwachung des Anhängersteuerventils 8 erfolgt über die elektrische Leitung 138.

Mittels der Feststellbremsbetätigungseinrichtung 216 kann eine Feststellbremsfunktion der Bremsanlage 90 gesteuert werden. Die Feststellbremsfunktion kann von der Feststellbremsbetätigungseinrichtung 216 getrennt für das Fahrzeug und den ggf. an das Fahrzeug angekoppelten Anhänger aktiviert und deaktiviert werden. Die Druckluftversorgung erfolgt aus dem dritten Bremskreis. Zum Einlegen bzw. Lösen der Feststellbremsfunktion werden Federspeicherteile der Federspeicherbremszylinder 168 und 170 entlüftet bzw. belüftet. Hierfür stellt die Feststellbremsbetätigungseinrichtung 216 den ausgesteuerten Feststellbremsdruck über eine Druckluftleitung 218 einem Relaisventil 219 bereit, das diesen Luftdruck mit über eine Druckluftleitung 220 bezogener Druckluft verstärkt und zum Lösen der Feststellbremse über Druckluftleitungen 221 und 221a Federspeicherteilen der kombinierten Federspeicherbremszylinder 168 und 170 bereitstellt.

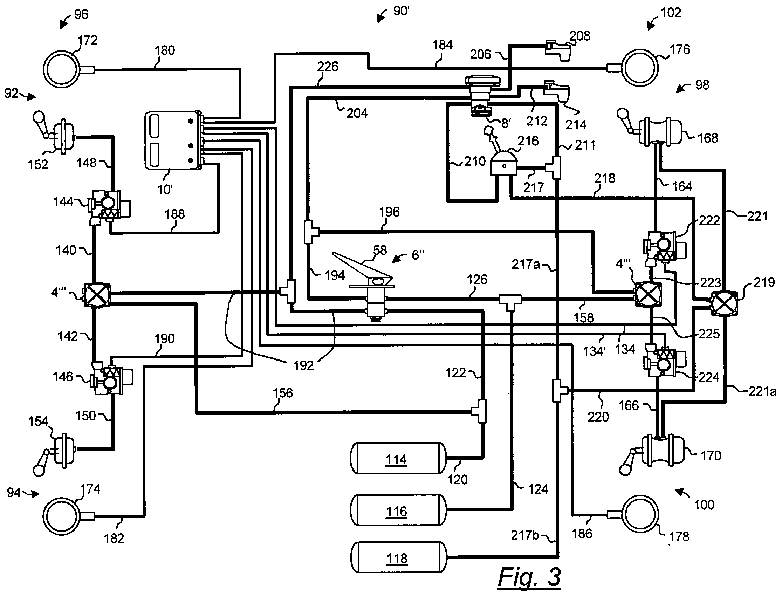

Fig. 3 zeigt eine Bremsanlage 90' bzw. die Bremsanlage 90 von Fig. 2 in einer Ausführung mit Austauschkomponenten 2 der zweiten Variante 14. Die Bremsanlage 90' ist als ABS-Bremssystem ausgebildet bzw. weist ein pneumatisches Bremssystem auf bei dem eine Antiblockiersystemfunktion elektronisch in einen Bremsvorgang eingreifen kann. Das ABS-Bremssystem weist jedoch kein elektronisches Bremssystem in dem Sinne auf, dass ein elektrisches Bremsanforderungssignal von der Bremsbetätigungseinrichtung 6" an die Einrichtung zur Steuerung 10' übertragen würde.

In weiten Teilen gleicht die Bremsanlage 90' somit der Bremsanlage 90 von Fig. 2. Insbesondere bezeichnen gleiche Bezugszeichen gleiche Bauteile. Nachfolgend werden die Unterschiede der Bremsanlage 90' gegenüber der Bremsanlage 90 durch den erfindungsgemäßen Austausch der Austauschkomponenten 2 des Systems 1 beschrieben.

Insbesondere weist die Bremsanlage 90' die das Bremsventil, jedoch keinen Bremswertgeber aufweisende Bremsbetätigungseinrichtung 6" aus Fig. 1 auf. Mittels Betätigung des Bremspedals 58 wird somit ein Sollbremsdruck im ersten und im zweiten Bremskreis analog zur Aussteuerung des Redundanzdrucks bei der Bremsanlage 90 gemäß Fig. 2 ausgesteuert. Elektronisch wird dagegen kein Bremswert sensiert, ggf. jedoch der ausgesteuerte Sollbremsdruck gemessen. Daher ist anstelle der als 1-Kanal-Achsmodulator 91 ausgebildeten Ventileinrichtung 4 an der Vorderachse 96 die als Relaisventil ausgebildete rein pneumatische Ventileinrichtung 4"', welche eine zweite Variante der Austauschkomponente 2 ist, vorgesehen.

In einem alternativen, nicht gezeigten Ausführungsbeispiel, insbesondere bei einer Bremsanlage mit geringeren Anforderungen an ein Ansprechverhalten der Bremsen, kann diese Ventileinrichtung 4"' auch entfallen. In diesem Fall wird den ABS-Ventilen 144 und 146 Druckluft direkt bzw. nicht in der Luftmenge verstärkt von der Bremspedaleinrichtung 6" bereitgestellt. Die ABS-Ventile werden in diesem alternativen wie auch im gezeigten Ausführungsbeispiel über die elektrischen Leitungen 188 und 190 angesteuert. Im Falle einer erkannten Blockierneigung der Räder an der Vorderachse 96 können mittels dieser ABS-Ventile 144 und 146 die Bremsen an diesen Rädern einzeln gelöst werden.

An der Hinterachse 102 ist ebenfalls anstelle der beiden Ventileinrichtungen 4 bzw. anstelle des 2-Kanal-Achsmodulators 103 eine einzige als Relaisventil ausgebildete Ventileinrichtung 4"' vorgesehen, wobei dieser Ventileinrichtung 4"' jedoch für jedes einzubremsende Rad ein ABS-Ventil 222 über eine Druckluftleitung 223 und ein ABS-Ventil 224 über eine Druckluftleitung 225 nachgeschaltet ist, so dass die Bremsen 98 und 100 an der Hinterachse 102 wie bei der Bremsanlage 90 im Falle einer erkannten Blockierneigung einzeln gelöst werden können. Eine Ansteuerung der ABS-Ventile 222 und 224 erfolgt über die elektrische Leitung 134 bzw. über eine elektrische Leitung 134'.

Beim zumindest teilweisen Umrüsten von der Bremsanlage 90 auf die Bremsanlage 90' oder beim alternativen Ausrüsten eines Fahrzeugs mit einer Bremsanlage nimmt die Ventileinrichtung 4'" den Platz des 2-Kanal-Achsmodulators 103 mit den Ventileinrichtungen 4 oder den Platz einer dieser Ventileinrichtungen 4 ein. Für die ABS-Ventile 222 und 224 sind standardmäßig bereits Plätze am Fahrzeug vorgesehen, die bei der Bremsanlage 90 nicht besetzt sind, an welchen jedoch die ABS-Ventile 222 und 224 zum Umrüsten auf das ABS-Bremssystem montiert werden können. Elektrische Schnittstellen an den ABS-Ventilen 222 und 224 sind vorzugsweise gleich den elektrischen Schnittstellen 32 an den Ventileinrichtungen 4 ausgebildet, so dass die elektrische Leitung 134 bzw. 134' mit dem ABS-Ventil 222 bzw. 224 anstelle der jeweiligen Ventileinrichtung 4 verbunden werden kann.

Des Weiteren entfällt in der Bremsanlage 90' gegenüber der Bremsanlage 90 von Fig. 2 die elektrische Verbindung 138 zwischen der anstelle der Steuereinrichtung 10 vorgesehenen Steuereinrichtung 10' gemäß Fig. 1 und der anstelle der Anhängersteuerventileinrichtung 8 von Fig. 1 vorgesehen Anhängersteuerventileinrichtung 8'. Eine elektrische Ansteuerung und Überwachung der Anhängersteuerventileinrichtung 8' kann nämlich bei der ABS-Bremsanlage entfallen. Dafür wird der Anhängersteuerventileinrichtung 8' über eine Druckluftleitung 226 und über die weitere pneumatische Schnittstelle 75 gemäß Fig. 1 zusätzlich der ausgesteuerte Luftdruck aus dem ersten Bremskreis zugeführt.

In Abweichung vom gezeigten Ausführungsbeispiel können anstelle der Ventileinrichtungen 4'" an der Vorderachse 96 bzw. an der Hinterachse 102 auch die Ventileinrichtungen 4" von Fig. 1 vorgesehen sein. In diesem Fall weist die Bremsanlage elektrische Leitungen gemäß Fig. 2 zur Ansteuerung der Ventileinrichtungen 4" auf. Dadurch ist es möglich auch ohne elektronisches Bremsanforderungssignal einen Bremsdruck elektropneumatisch auszusteuern, nämlich nicht als Erwiderung auf eine Betätigung des Bremspedals 58, sondern in Erwiderung auf ein elektronisches Eingreifen durch die Steuereinrichtung 10' bzw. durch eine alternativ verbaute Steuereinrichtung. Mit dieser von der gezeigten Bremsanlage 90' abweichenden Bremsanlage ist daher möglich, auch eine Antriebsschlupfregelung und eine elektronische Stabilitätsfunktion bereitzustellen.

Gemäß einem weiteren nicht gezeigten, auf dem Ausführungsbeispiel gemäß Fig. 3 aufbauenden Ausführungsbeispiel können die ABS-Ventile 144, 146, 222 und 224 sowie ggf. die Radsensiermittel 172 bis 178 auch entfallen, so dass die Bremsanlage 90 bzw. das EBS-Bremssystem auch in ein rein pneumatisches Bremssystem ohne Antiblockierfunktion umgerüstet werden kann. Ggf. ist hier eine wiederum von der Steuereinrichtung 10 oder 10' abweichende als zweite Variante 14 ausgebildete Steuerungseinrichtung bzw. die Steuereinrichtung 10 oder 10' entsprechend umzuprogrammieren bzw. umzuschalten.

Bei einem weiteren nicht gezeigten Ausführungsbeispiel sind zur Umrüstung des EBS-Bremssystems bzw. der Bremsanlage 90 von Fig. 2 in ein ABS-Bremssystem die Ventileinrichtungen 4 an der Hinterachse 102 des Fahrzeugs durch die Ventileinrichtungen 4' gemäß Fig. 1 ersetzt. Diese Ventileinrichtungen 4' ermöglichen für eine Antiblockierfunktion, für eine Antriebsschlupfregelung und für eine elektronische Stabilitätskontrolle ein gezieltes einzelnes Belüften bzw. Entlüften der Druckluftleitung 164 bzw. 166 zum Federspeicherbremszylinder 168 bzw. 170 im Falle eines elektronischen Eingriffs durch die Steuerungseinrichtung 10' bzw. durch eine alternativ einzusetzende Steuerungseinrichtung unabhängig vom manuell ausgesteuerten Sollbremsdruck bzw. vorrangig vor dem ausgesteuerten Sollbremsdruck.

Bei diesem nicht gezeigten Ausführungsbeispiel sind ferner an der Vorderachse 96 zwei weitere Ventileinrichtungen 4' vorgesehen, welche die Ventileinrichtung 4 sowie die ABS-Ventile 144 und 146 der Bremsanlage 90 gemäß Fig. 2 ersetzen. Die Funktion der Ventileinrichtungen 4' an der Vorderachse 96 gleicht dabei der Funktion der Ventileinrichtungen 4' an der Hinterachse 102 des Fahrzeugs. Eine der Ventileinrichtungen 4' nimmt im Falle einer Umrüstung den Platz der Ventileinrichtung 4 gemäß Fig. 2 ein. Die zweite Ventileinrichtung 4' an der Vorderachse 96 wird an einem bereits bei dem die Bremsanlage 90 von Fig. 2 aufweisenden Fahrzeug vorgesehenen Platz montiert.

In einer Weiterbildung der Erfindung können die mechanischen Befestigungsstellen der Ventileinrichtungen 4 bis 4'" bzw. mechanische Befestigungsstellen der ABS-Ventile 144, 146, 222 und 224 derart ausgebildet sein, dass eine Ventileinrichtung 4 bis 4'" auch anstelle eines ABS-Ventils am Fahrzeug montiert werden kann bzw. dass umgekehrt am Montageort einer Ventileinrichtung 4 bis 4'" ein ABS-Ventils 144, 146, 222, 224 montiert werden kann.

Zum einfachen Umrüsten können ferner Verrohrungen bzw. Druckschläuche und elektrische Leitungen ausreichend lang bemessen sein, so dass bspw. die elektrischen Leitungen 134 und 134' sowohl die Ventileinrichtungen 4 an der Hinterachse 102 der Bremsanlage 90 von Fig. 2 als auch die ABS-Ventile 222 und 224 der Bremsanlage 90' gemäß Fig. 3 erreichen können. Alternativ können auch Verlängerungen bzw. Adapter vorgesehen sein.

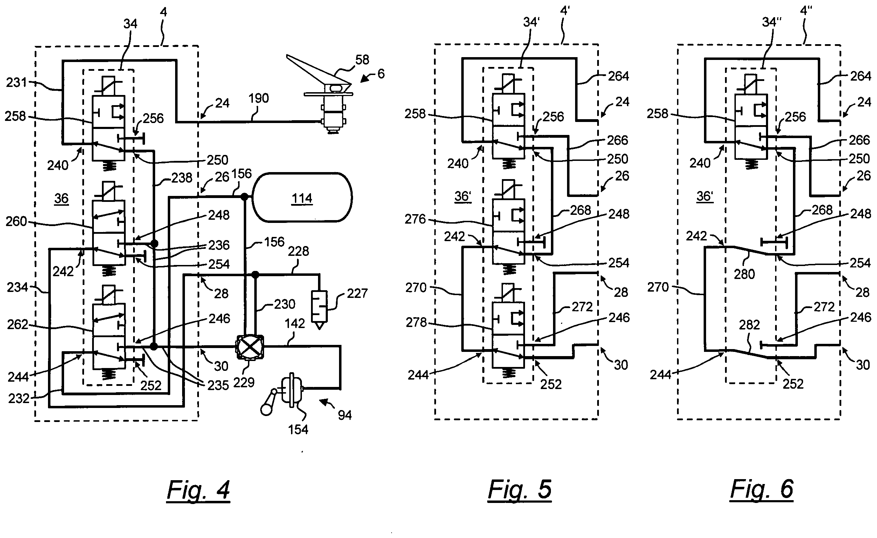

Fig. 4 zeigt die erste Variante 12 der Ventileinrichtung 4 des Systems 1 von Fig. 1 mit dem Ventilblock 34 sowie mit Verbindungen zur Bremsbetätigungseinrichtung 6, zum Druckluftvorratsbehälter 114, zu einer Entlüftung 227 und zum Bremszylinder 154 jeweils über die Druckluftleitung 190 bzw. 156 bzw. eine Druckluftleitung 228 bzw. die Druckluftleitung 142 in gegenüber Fig. 2 reduzierter bzw. vereinfachter Darstellung. Zur Ventileinrichtung 4 gehört ferner ein Relaisventil 229, das hier zwar außerhalb des Gehäuses 36 dargestellt ist. In der Regel weist jedoch das Gehäuse 36 auch das Relaisventil 229 auf. Über eine Druckluftleitung 230 ist das Relaisventil 229 mit der Entlüftung 227 pneumatisch verbunden. Die Druckluftleitungen 190, 156, 228 und 142 sind über die pneumatischen Schnittstellen 24 bis 30 mit der Ventileinrichtung 4 pneumatisch verbunden. Das Gehäuse 36 der Ventileinrichtung 4 weist Druckluftleitungen 231, 232, 234, 235, 236 und 238 auf, die zumindest teilweise als Bohrungen im Gehäuse 36 ausgebildet sind. Diese Druckluftleitungen 231-238 sind pneumatische Verbindungen zwischen den pneumatischen Schnittstellen 24 bis 30 und dem Ventilblock 34. Pneumatische Verbindungen zwischen den Druckluftleitungen 231-238 und dem Ventilblock 34 sind dabei interne pneumatische Schnittstellen 240, 242, 244, 246, 248 und 250. Darüber hinaus sind weitere interne pneumatische Schnittstellen 252, 254 und 256 zwischen dem Gehäuse 36 der Ventileinrichtung 4 und dem Ventilblock 34 vorhanden, können ggf. jedoch auch entfallen.

Die hier nicht dargestellte elektrische Schnittstelle 32 gemäß Fig. 1 ist über nicht dargestellte elektrische Leitungen mit einer ebenfalls nicht dargestellten internen elektrischen Schnittstelle zum Ventilblock 34 mit diesem Ventilblock 34 elektrisch verbunden. Alternativ kann der Ventilblock 34 auch direkt die elektrische Schnittstelle 32 aufweisen. Der Ventilblock 34 weist drei Elektromagnetventile 258, 260 und 262 auf, die somit elektrisch angesteuert werden können. Mittels der drei Elektromagnetventile 258 bis 262 kann die Ventileinrichtung 4 die Funktionen Redundanz, Belüften/Entlüften und Halten bereitstellen.

Die Darstellung zeigt die Elektromagnetventile 258 bis 262 jeweils im unbestromten Zustand. In diesem Fall ist die pneumatische Schnittstelle 24 mit der pneumatischen Schnittstelle 30 über das Elektromagnetventil 258 pneumatisch verbunden, so dass die Bremse 94 gemäß dem mittels der Bremspedaleinrichtung 6 ausgesteuerten Redundanzdruck betätigt werden kann.

Im Normalfall, d.h. bei ordnungsgemäßer Funktion des EBS-Bremssystems, wird hingegen das Elektromagnetventil 258 bestromt und die pneumatische Schnittstelle 24 somit von der pneumatischen Schnittstelle 30 pneumatisch getrennt. In diesem Fall kann die pneumatische Schnittstelle 30 durch Bestromen des Elektromagnetventils 260 mit der Entlüftung 227 bzw. durch Bestromen des Elektromagnetventils 262 mit dem Druckluftvorratsbehälter 114 pneumatisch verbunden werden, so dass ein gemäß dem Bremsanforderungssignal gewünschter Bremsdruck in der Druckluftleitung 142 elektropneumatisch ausgesteuert werden kann.

Der 3-fach Magnetventilblock 34 weist zudem einen nicht dargestellten Drucksensor auf, der über die elektrische Schnittstelle 32 oder über eine weitere elektrische Schnittstelle mit der Steuereinrichtung der Bremsanlage verbunden werden kann.

Fig. 5 und Fig. 6 zeigen die zur Ventileinrichtung 4 gemäß Fig. 4 alternativen zweiten Varianten 14, nämlich die für eine ABS-Bremsanlage vorgesehenen Ventileinrichtungen 4' und 4" von Fig. 1. Die Gehäuse 36' und 36" der Ventileinrichtungen 4' und 4" sind gleich oder zumindest soweit ähnlich dem Gehäuse 36 der Ventileinrichtung 4 ausgebildet, dass sie mechanisch alternativ in der gleichen Bremsanlage verbaut werden können. Insbesondere weisen die Gehäuse 36, 36' und 36" die gleichen hier nicht dargestellten mechanischen Befestigungsstellen 16 bis 22 sowie die gleiche hier ebenfalls nicht dargestellte elektrische Schnittstelle 32 auf.

Auch die pneumatischen Schnittstellen 24 bis 30 der Ventileinrichtung 4 von Fig. 4 sind bei der Ventileinrichtung 4' bzw. 4" vorgesehen, gleichermaßen ausgebildet und gleichermaßen angeordnet. Eine Ausbildung der Ventilblöcke 34' und 34" ermöglicht im gezeigten Ausführungsbeispiel eine gleichartige mechanische Befestigung in einem der Gehäuse 36 bis 36" und/oder gleiche interne pneumatische Schnittstellen zu einem der Gehäuse 36 bis 36". Alternativ können sich die Ventilblöcke jedoch auch in diesen Merkmalen voneinander unterschieden.

Die Gehäuse 36 und 36' weisen gleich ausgebildete und gleich relativ zueinander angeordnete interne Schnittstellen zum jeweiligen Ventilblock 34, 34' bzw. 34" auf. Somit können die Ventileinrichtungen 4 bis 4" bzw. die Gehäuse 36 und 36' der Ventileinrichtungen 4 bis 4" zunächst auf gleiche Weise gefertigt werden. In einem weiteren Fertigungsschritt werden die Gehäuse 36 und 36' dann jedoch mit unterschiedlichen Bohrungen bzw. unterschiedlichen Druckluftleitungen versehen. Auf diese Weise ist es möglich, trotz des weitgehend gleichen Fertigungsprozesses der Ventileinrichtungen 4 bis 4" unterschiedliche Funktionalitäten dieser Ventileinrichtungen 4 bis 4" bereitzustellen. Insbesondere weist das Gehäuse 36' der Ventileinrichtung 4' von Fig. 5 bzw. 4" von Fig. 6 gegenüber den Druckleitungen der Ventileinrichtung 4 von Fig. 4 anders verlaufende Druckluftleitungen 264, 266, 268, 270, 271, 272 und 274 auf.

Der Ventilblock 34' unterscheidet sich insbesondere dadurch vom Ventilblock 34, dass anstelle der Elektromagnetventile 260 und 262 Elektromagnetventile 276 und 278 vorgesehen sind, die identisch zueinander sowie identisch zum Elektromagnetventil 258 ausgebildet sind. Im unbestromten Zustand dieser drei Elektromagnetventile 258, 276 und 278 ist wie bei der Ventileinrichtung 4 die pneumatische Schnittstelle 24 pneumatisch mit der pneumatischen Schnittstelle 30 verbunden, so dass eine Bremse mit dem vom Bremspedal 58 ausgesteuerten Sollbremsdruck betätigt werden kann.

Durch elektrische Ansteuerung der Elektromagnetventile 258, 276 und 278 können die Funktionen eines Antiblockiersystems, einer elektronischen Stabilitätskontrolle und einer Antriebsschlupfregelung bereitgestellt werden. Diese Funktionen erfordern es, ggf. einen gegenüber dem ausgesteuerten Sollbremsdruck höheren oder niedrigeren Bremsdruck auszusteuern bzw. zu halten. Durch Bestromung des Elektromagnetventils 258 wird deshalb der an der pneumatischen Schnittstelle 30 bereitgestellte Bremsdruck erhöht, durch Bestromung des Elektromagnetventils 276 gehalten bzw. durch Bestromung des Elektromagnetventils 278 verringert. Die Ventileinrichtung 4' kann folglich an allen Rädern eines Fahrzeugs ohne zusätzliche ABS-Ventile eingesetzt werden. Somit können hohe Stückzahlen der Ventileinrichtung 4 produziert werden, was die Ventileinrichtung 4' entsprechend kostengünstig macht.

Bei der Ventileinrichtung 4" gemäß Fig. 6 sind hingegen der pneumatischen Schnittstelle 30 nachgeordnet noch ABS-Ventile vorgesehen, die einen ausgesteuerten Bremsdruck halten oder durch Entlüftung verringern können. Daher sind die Elektromagnetventile 276 und 278, die bei der Ventileinrichtung 4' für das Halten bzw. Verringern des Bremsdrucks zuständig sind, bei der Ventileinrichtung 4" nicht vorhanden. Dennoch weisen die Ventileinrichtungen 4' und 4" das identische Gehäuse 36' auf, so dass dieses gemeinsame Gehäuse 36' in hohen Stückzahlen kostengünstig produziert werden kann.

Im Ventilblock 34" sind gegenüber dem Ventilblock 34' die Ventile 276 und 278 entfallen. Lücken bzw. Freiräume zur Aufnahme dieser Elektromagnetventile 276 und 278 bei der Ventileinrichtung 4' können bei der Ventileinrichtung 4" bspw. mit Dummy-Körpern bzw. Ventilersatzkörpern ausgefüllt oder mit einer Vergussmasse ausgespritzt sein. Dabei sind vorteilhafterweise Luftkanäle bzw. Druckluftleitungen 280 und 282 im Ventilblock 34" vorgesehen, durch welche die internen pneumatischen Schnittstellen 242 und 254 sowie 244 und 252 miteinander verbunden sind. Die Ventileinrichtung 4" verhält sich daher so wie die Ventileinrichtung 4' in dem Fall, dass die Elektromagnetventile 276 und 278 dauerhaft unbestromt sind.

Die Ventilblöcke 34' und 34" können wie der Ventilblock 34 einen Drucksensor enthalten. Jedoch ist dieser Drucksensor bei den für ein ABS-Bremssystem verwendeten Ventileinrichtungen 4' und 4" in bestimmten Ausführungsformen der Erfindung auch entbehrlich, insbesondere dann, wenn ein Drucksensor in der Bremsbestätigungseinrichtung 6' vorhanden ist.

Alle in der vorgenannten Figurenbeschreibung, in den Ansprüchen und der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. System mit einer Ventileinrichtung (4, 4', 4", 4"') für eine pneumatisch betriebene Bremsanlage (90, 90') eines Fahrzeugs,
- wobei die Bremsanlage (90, 90') diese Ventileinrichtung (4, 4', 4", 4'") und wenigstens eine Bremse (92, 94, 96, 98) aufweist und
- wobei mittels dieser Ventileinrichtung (4, 4', 4", 4'") ein der Bremse (92, 94, 96. 98) zuführbarer pneumatischer Bremsdruck aussteuerbar ist,
**dadurch gekennzeichnet, dass**
- das System (1) wenigstens zwei Varianten (12, 14) dieser Ventileinrichtung (4, 4', 4", 4'") aufweist, die alternativ in der Bremsanlage (90, 90') einsetzbar sind,
- wobei eine erste Variante (12) der Ventileinrichtung (4, 4', 4", 4'") als Modulator (4) für den Einsatz an einer elektronisch geregelten Ausführung der Bremsanlage (90) ausgebildet ist,
- wobei eine zweite Variante (14) der Ventileinrichtung (4, 4', 4", 4'") für den Einsatz in einer pneumatisch gesteuerten Ausführung der Bremsanlage (90') ausgebildet ist und
- wobei die Varianten (12, 14) der Ventileinrichtung (4, 4', 4", 4'") gleich zueinander ausgebildete mechanische Befestigungsstellen (16, 18, 20, 22) und gleich zueinander ausgebildete pneumatische Schnittstellen (24, 26, 28, 30) aufweisen.

2. System nach Anspruch 1,
**dadurch gekennzeichnet, dass**
Varianten (12, 14) der Ventileinrichtung (4, 4', 4") jeweils einen wenigstens ein Magnetventil (258, 260, 262, 276, 278) aufweisenden Ventilblock (34, 34', 34"), insbesondere einen Magnetventilblock, mit Abmessungen derart aufweisen, dass die Ventilblöcke (34, 34', 34") der unterschiedlichen Varianten (12, 14) der Ventileinrichtung (4, 4', 4") über gleiche Befestigungsmittel mechanisch oder über gleiche interne pneumatische Schnittstellen (240-256) pneumatisch mit Gehäusen (36, 36') der Ventileinrichtungen (4, 4', 4") verbindbar sind, wobei die Gehäuse (36, 36') der Ventileinrichtungen (4, 4', 4") von außen im Wesentlichen gleichartig ausgebildet sind und in ihnen der jeweilige Ventilblock (34, 34', 34") angeordnet ist.

3. System nach einem der vorherigen Ansprüche,
**dadurch gekennzeichnet, dass**
die erste Variante (12) der Ventileinrichtung (4) als Achsmodulator oder Radmodulator in einer elektronisch geregelten Ausführung der Bremsanlage (90) ausgebildet ist, wobei der Ventilblock (34) als 3-fach-Magnetventilblock mit drei Magnetventilen ausgebildet ist, mittels denen elektropneumatisch der Bremsdruck gemäß einem Bremswert sowie mittels eines Antiblockiersystems sowie mittels einer Stabilisierungskontrolle sowie mittels einer Antriebsschlupfregelung aussteuerbar ist und mittels denen im Falle eines Ausfalls der elektropneumatischen Aussteuerbarkeit der Bremsdruck pneumatisch gemäß einem Redundanzdruck aussteuerbar ist, und die zweite Variante (14) der Ventileinrichtung (4', 4", 4"') als Radmodulator für den Einsatz in einer pneumatisch gesteuerten Ausführung der Bremsanlage (90'), wobei der Ventilblock (34') als 3-fach-Magnetventilblock mit drei Magnetventilen (258, 276, 278) ausgebildet ist, mittels denen der Bremsdruck pneumatisch gemäß dem Sollbremsdruck sowie elektropneumatisch mittels eines Antiblockiersystems oder einer Antriebsschlupfregelung aussteuerbar ist,
oder als Achsmodulator für den Einsatz in einer pneumatisch gesteuerten Ausführung der Bremsanlage (90'), wobei der Ventilblock (34") als 1-fach-Magnetventilblock mit einem Magnetventil (258) ausgebildet ist, mittels dessen der Bremsdruck als der größere Druck von einem pneumatisch gemäß dem Sollbremsdruck und einem elektropneumatisch mittels einer Antriebsschlupfregelung erzeugten Druck aussteuerbar ist, ,oder als Relaisventil (4'") für den Einsatz in einer pneumatisch gesteuerten Ausführung der Bremsanlage (90'), mittels dessen der Bremsdruck gemäß dem Sollbremsdruck aussteuerbar ist, ausgebildet ist.

4. System nach einem der vorherigen Ansprüche,
**dadurch gekennzeichnet, dass**
die Ventileinrichtung (4, 4', 4", 4"') eine von wenigstens zwei Austauschkomponenten (2) des Systems ist, von denen das System (1) jeweils wenigstens zwei Varianten (12, 14) aufweist, wobei eine Bremsbetätigungseinrichtung (6, 6', 6"), eine Anhängersteuerventileinrichtung (8, 8') und eine Einrichtung zur Steuerung (10, 10') Austauschkomponenten (2) sind, wobei eine erste Variante (12) der Bremsbetätigungseinrichtung (6) einen Bremswertgeber aufweist, wobei diese erste Variante (12) der Bremsbetätigungseinrichtung (6), die erste Variante (12) der Ventileinrichtung (4), eine erste Variante (12) der Anhängersteuerventileinrichtung (8) und eine erste Variante (12) der Einrichtung zur Steuerung (10) in der elektronisch geregelten Ausführung der Bremsanlage (90) einsetzbar sind,
wobei eine zweite Variante (14) der Bremsbetätigungseinrichtung (6', 6") ein Bremsventil, jedoch keinen Bremswertgeber, aufweist,
wobei diese zweite Variante (14) der Bremsbetätigungseinrichtung (6', 6"), die zweite Variante (14) der Ventileinrichtung (4', 4", 4"'), eine zweite Variante (14) der Anhängersteuerventileinrichtung (8') und eine zweite Variante (14) der Einrichtung zur Steuerung (10') in der pneumatisch gesteuerten Ausführung der Bremsanlage (90') einsetzbar sind,
wobei die Varianten (12, 14) der Austauschkomponenten (2) des Systems (1), insbesondere die Varianten (12, 14) der Bremsbetätigungseinrichtung (6, 6', 6"), die Varianten (12, 14) der Ventileinrichtung (4, 4', 4", 4"'), die Varianten (12, 14) der Anhängersteuerventileinrichtung (8, 8') und die Varianten (12, 14) der Einrichtung zur Steuerung (10, 10') jeweils gleich zueinander ausgebildete und gleich zueinander an der jeweiligen Variante (12, 14) relativ zueinander angeordnete mechanische Befestigungsstellen (16, 18, 20, 22, 38, 40, 42, 62, 64, 66, 78, 80, 82, 84) und jeweils zueinander gleiche elektrische Schnittstellen (32, 54, 76, 88) aufweisen und
wobei die Varianten (12, 14) der Bremsbetätigungseinrichtung (6, 6', 6"), der Ventileinrichtung (4, 4', 4", 4'") und der Anhängersteuerventileinrichtung (8, 8') jeweils zueinander gleiche pneumatische Schnittstellen (24, 26, 28, 30, 46, 48, 50, 52, 68, 70, 71, 72, 74) aufweisen.

5. System nach einem der vorherigen Ansprüche,
**gekennzeichnet durch**
Halterungen und Rohre oder Schläuche und Kabel oder Kabelbäume als Systemkomponenten, die sowohl für den Einsatz in der elektronisch geregelten Ausführung der Bremsanlage (90) als auch für den Einsatz in der pneumatisch gesteuerten Ausführung der Bremsanlage (90') geeignet sind.

6. System nach einem der vorherigen Ansprüche,
**dadurch gekennzeichnet, dass**
die Ventileinrichtung (4, 4', 4", 4"') oder wenigstens eine weitere Austauschkomponente (2) des Systems eine Komponente für eine Bremsanlage (90, 90') und einen mechanisch oder pneumatisch oder elektrisch mit dieser Komponente verbundenen Adapter aufweist, der die mechanische Befestigungsstelle (16, 18, 20, 22, 38, 40, 42, 62, 64, 66, 78, 80, 82, 84) bzw. pneumatische Schnittstelle (24, 26, 28, 30, 46, 48, 50, 52, 68, 70, 71, 72, 74) bzw. elektrische Schnittstelle (32, 54, 76, 88) der Austauschkomponente (2) aufweist, wobei die Ventileinrichtung (4, 4', 4", 4'"), eine Bremsbetätigungseinrichtung (6, 6', 6"), eine Anhängersteuerventileinrichtung (8, 8') und eine Einrichtung zum Steuern (10, 10'), , Austauschkomponenten (2) sind.

7. Ventileinrichtung für ein System (1) nach Anspruch 2,
**gekennzeichnet durch**
eine Ausbildung als die erste Variante (12) der Ventileinrichtung (4) für den Einsatz als Achsmodulator oder Radmodulator in der elektronisch geregelten Ausführung der Bremsanlage (90), wobei der Ventilblock (34) als 3-fach-Magnetventilblock mit drei Magnetventilen ausgebildet ist, mittels denen elektropneumatisch der Bremsdruck gemäß einem Bremswert sowie mittels eines Antiblockiersystems sowie mittels einer Stabilisierungskontrolle sowie mittels einer Antriebsschlupfregelung aussteuerbar ist und mittels denen im Falle eines Ausfalls der elektropneumatischen Aussteuerbarkeit der Bremsdruck pneumatisch gemäß einem Redundanzdruck aussteuerbar ist.

8. Ventileinrichtung für ein System (1) nach Anspruch 2, **gekennzeichnet durch**
eine Ausbildung als die zweite Variante (14) der Ventileinrichtung (4') für den Einsatz in der pneumatisch gesteuerten Ausführung der Bremsanlage (90'), wobei die Ventileinrichtung (4') als Radmodulator und der Ventilblock (34') als 3-fach-Magnetventilblock mit drei Magnetventilen (258, 276, 278) ausgebildet ist, mittels denen der Bremsdruck pneumatisch gemäß dem Sollbremsdruck sowie elektropneumatisch mittels eines Antiblockiersystems oder einer Antriebsschlupfregelung aussteuerbar ist.

9. Ventileinrichtung für ein System (1) nach Anspruch 2, **gekennzeichnet durch**
eine Ausbildung als die zweite Variante (14) der Ventileinrichtung (4") für den Einsatz in der pneumatisch gesteuerten Ausführung der Bremsanlage (90'), wobei die Ventileinrichtung (4") als Achsmodulator und der Ventilblock (34") als 1-fach-Magnetventilblock mit einem Magnetventil (258) ausgebildet ist, mittels dem der Bremsdruck als der größere Druck von einem pneumatisch gemäß dem Sollbremsdruck und dem elektropneumatisch mittels einer Antriebsschlupfregelung erzeugten Druck aussteuerbar ist.

10. Ventileinrichtung für ein System (1) nach Anspruch 2, **gekennzeichnet durch**
eine Ausbildung als die zweite Variante (14) der Ventileinrichtung (4'") für den Einsatz in der pneumatisch gesteuerten Ausführung der Bremsanlage (90'), wobei die Ventileinrichtung (4'") als Relaisventil ausgebildet ist, mittels dem der Bremsdruck gemäß dem Sollbremsdruck aussteuerbar ist.

11. Ventileinrichtung nach einem der Ansprüche 7 bis 10,
**dadurch gekennzeichnet, dass**
in dem Gehäuse (36, 36') der Ventileinrichtung Luftkanäle (231 bis 238, 246 bis 274) angeordnet sind, die in Abhängigkeit von einer Bestückung der Ventileinrichtung (4, 4', 4", 4'") mit wenigstens einer Ventilpatrone oder wenigstens einem Ventilblock (34, 34', 34"), insbesondere Magnetventilpatrone oder Magnetventilblock, unterschiedlich schaltbar oder geschaltet sind.

12. Bremsbetätigungseinrichtung für ein System (1) nach Anspruch 4,
**gekennzeichnet durch**
eine Ausführung als die erste Variante (12) der Bremsbetätigungseinrichtung (6) mit einem Bremswertgeber, die für den Einsatz in der elektronisch geregelten Ausführung der Bremsanlage (90) geeignet ist, oder durch eine Ausführung als die zweite Variante (14) der Bremsbetätigungseinrichtung (6') mit einem Bremsventil, die für den Einsatz in der pneumatisch gesteuerten Ausführung der Bremsanlage (90') geeignet ist.

13. Anhängersteuerventileinrichtung für ein System (1) nach Anspruch 4,
**gekennzeichnet durch**
eine Ausführung als die erste Variante (12) der Anhängersteuerventileinrichtung (8), die für den Einsatz in der elektronisch geregelten Ausführung der Bremsanlage (90) geeignet ist und eine elektrische Schnittstelle (76) sowie pneumatische Schnittstellen (68, 70, 71, 72, 74) aufweist, oder als die zweite Variante (14) der Anhängersteuerventileinrichtung (8'), die für den Einsatz in der pneumatisch gesteuerten Ausführung der Bremsanlage (90') geeignet ist und pneumatische Schnittstellen (68, 70, 71, 72, 74) aufweist.

14. Einrichtung zur Steuerung für ein System (1) nach Anspruch 4,
**gekennzeichnet durch**
eine Ausführung als die erste Variante (12) der Einrichtung zur Steuerung (10), die für den Einsatz in der elektronisch geregelten Ausführung der Bremsanlage (90) geeignet ist, oder als die zweite Variante (14) der Einrichtung zur Steuerung (10'), die für den Einsatz in der pneumatischen Ausführung der Bremsanlage (90') geeignet ist.

15. Bremsanlage für ein Fahrzeug, insbesondere Nutzfahrzeug,
**gekennzeichnet durch**
wenigstens eine Austauschkomponente (2) des Systems (1) nach Anspruch 4, insbesondere eine Ventileinrichtung (4, 4', 4", 4'") nach Anspruch 7 oder eine Bremsbetätigungseinrichtung (6, 6', 6") nach Anspruch 12 oder eine Anhängersteuerventileinrichtung (8, 8') nach Anspruch 13 oder eine Einrichtung zur Steuerung (10, 10') nach Anspruch 14.

16. Fahrzeug, insbesondere Nutzfahrzeug,
**gekennzeichnet durch**
eine Bremsanlage (90, 90') nach Anspruch 15 oder eine Ventileinrichtung (4, 4', 4", 4'") nach einem der Ansprüche 7 bis 11 oder eine Bremsbetätigungseinrichtung (6, 6', 6") nach Anspruch 12 oder eine Anhängersteuerventileinrichtung (8, 8') nach Anspruch 13 oder eine Einrichtung zur Steuerung (10, 10') nach Anspruch 14.

17. Verwendung einer Ventileinrichtung als die Ventileinrichtung (4, 4', 4", 4'") nach einem der Ansprüche 7 bis 11 oder einer Bremsbetätigungseinrichtung als die Bremsbetätigungseinrichtung (6, 6', 6") nach Anspruch 12 oder einer Anhängersteuerventileinrichtung als die Anhängersteuerventileinrichtung (8, 8') nach Anspruch 13 oder einer Einrichtung zur Steuerung als die Einrichtung zur Steuerung (10, 10') nach Anspruch 14, in einem System (1) nach einem der Ansprüche 1 bis 6.

18. Verwendung nach Anspruch 17, wobei der Adapter nach Anspruch 6 verwendet wird.

19. Verfahren zum Umrüsten einer Bremsanlage,
**dadurch gekennzeichnet, dass**
wenigstens eine Komponente der Bremsanlage ersetzt wird durch eine Austauschkomponente (2) des Systems (1) nach Anspruch 4, insbesondere durch eine Ventileinrichtung (4, 4', 4", 4'") nach einem der Ansprüche 7 bis 11 oder durch eine Bremsbetätigungseinrichtung (6, 6', 6") nach Anspruch 12 oder durch eine Anhängersteuerventileinrichtung (8, 8') nach Anspruch 13 oder durch eine Einrichtung zur Steuerung (10, 10') nach Anspruch 14.

## Claims

1. System with a valve device (4, 4', 4", 4"') for a pneumatically operated brake system (90, 90') of a vehicle,
- wherein the brake system (90, 90') comprises said valve device (4, 4', 4", 4"') and at least one brake (92, 94, 96, 98) and
- wherein a pneumatic brake pressure that can be delivered to the brake (92, 94, 96, 98) can be adjusted by means of said valve device (4, 4', 4", 4"'),
**characterized in that**
- the system (1) comprises at least two variants (12, 14) of said valve device (4, 4', 4", 4"'), which can be used alternatively in the brake system (90, 90'),
- wherein a first variant (12) of the value device (4, 4', 4", 4"') is in the form of a modulator (4) for use on an electronically controlled embodiment of the brake system (90),
- wherein a second variant (14) of the value device (4, 4', 4", 4"') is designed for use in a pneumatically controlled embodiment of the brake system (90') and
- wherein the variants (12, 14) of the valve device (4, 4', 4", 4"') comprise mechanical fixing points (16, 18, 20, 22) designed identically to each other and pneumatic interfaces (24, 26, 28, 30) designed identically to each other.

2. System according to Claim 1,
**characterized in that**
variants (12, 14) of the valve device (4, 4', 4") each comprise a valve block (34, 34', 34") comprising at least one solenoid valve (258, 260, 262, 276, 278), in particular a solenoid valve block, with dimensions such that the valve blocks (34, 34', 34") of the different variants (12, 14) of the valve device (4, 4', 4") can be mechanically connected via identical fixing means or pneumatically connected via identical internal pneumatic interfaces (240-256) to housings (36, 36') of the value devices (4, 4', 4''), wherein the housing (36, 36') valve devices (4, 4', 4")are externally essentially similarly designed and in them the respective valve block (34, 34', 34") is arranged.

3. System according to any one of the preceding claims,
**characterized in that**
the first variant (12) of the valve device (4) is in the form of an axle modulator or a wheel modulator in an electronically controlled embodiment of the brake system (90), wherein the valve block (34) is in the form of a triple solenoid valve block with three solenoid valves, by means of which the brake pressure can be adjusted electropneumatically according to a brake value and by means of an anti-lock brake system and by means of a stabilizing control means and by means of a drive slip control means and with which, in the event of a failure of the electropneumatic adjustment capability, the brake pressure can be adjusted pneumatically according to a redundant pressure, and the second variant (14) of the valve device (4', 4", 4"') is in the form of a wheel modulator for use in a pneumatically controlled embodiment of the brake system (90'), wherein the valve block (34') is in the form of a triple solenoid valve block with three solenoid valves (258, 276, 278), by means of which the brake pressure can be adjusted pneumatically according to the target brake pressure and can be adjusted electropneumatically by means of an anti-lock brake system or a drive slip control means,
or in the form of an axle modulator for use in a pneumatically controlled embodiment of the brake system (90'), wherein and the valve block (34'') is in the form of a single solenoid valve block with a solenoid valve (258), with which the brake pressure can be adjusted as the greater pressure of the pressure generated pneumatically according to the target brake pressure and a pressure generated electropneumatically by means of a drive slip control means, or in the form of a relay valve (4"') for use in a pneumatically controlled embodiment of the brake system (90'), by means of which the brake pressure can be adjusted according to the target brake pressure.

4. System according to any one of the preceding claims,
**characterized in that**
the valve device (4, 4', 4", 4"') is one of at least two exchange components (2) of the system, of which the system (1) comprises at least two variants (12, 14) of each, wherein a brake actuator (6, 6', 6"), a trailer control valve device (8, 8') and a control device (10, 10'), are exchange components (2),
wherein a first variant (12) of the brake actuator (6) comprises a brake value transmitter, wherein said first variant (12) of the brake actuator (6), the first variant (12) of the valve device (4), a first variant (12) of the trailer control valve device (8) and a first variant (12) of the control device (10) can be used in the electronically controlled embodiment of the brake system (90), wherein a second variant (14) of the brake actuator (6', 6") comprises a brake valve, but no brake value transmitter,
wherein said second variant (14) of the brake actuator (6', 6"), the second variant (14) of the valve device (4', 4", 4"'), a second variant (14) of the trailer control valve device (8') and a second variant (14) of the control device (10') can be used in the pneumatically controlled embodiment of the brake system (90'),
wherein the variants (12, 14) of the exchange components (2) of the system (1), in particular the variants (12, 14) of the brake actuator (6, 6', 6"), the variants (12, 14) of the valve device (4, 4', 4", 4"'), the variants (12, 14) of the trailer control valve device (8, 8') and the variants (12, 14) of the control device (10, 10') comprise mechanical fixing points (16, 18, 20, 22, 38, 40, 42, 62, 64, 66, 78, 80, 82, 84) that are designed identically to each other and arranged relative to each other and identically to each other on the respective variant (12, 14) and comprise electrical interfaces (32, 54, 76, 88) that are identical to each other and
wherein the variants (12, 14) of the brake actuator (6, 6', 6"), of the valve device (4, 4', 4", 4"') and of the trailer control valve device (8, 8') each comprise pneumatic interfaces (24, 26, 28, 30, 46, 48, 50, 52, 68, 70, 71, 72, 74) that are identical to each other.

5. System according to any one of the preceding claims,
**characterized by**
mountings and pipes or hoses and cables or cable looms as system components, which are suitable both for use in the electronically controlled embodiment of the brake system (90) and also for use in the pneumatically controlled embodiment of the brake system (90').

6. System according to any one of the preceding claims,
**characterized in that**
the valve device (4, 4', 4", 4"') or at least one other exchange component (2) of the system comprises a component for a brake system (90, 90') and an adapter mechanically or pneumatically or electrically connected to said component, which adapter comprises the mechanical fixing point (16, 18, 20, 22, 38, 40, 42, 62, 64, 66, 78, 80, 82, 84) or pneumatic interface (24, 26, 28, 30, 46, 48, 50, 52, 68, 70, 71, 72, 74) or electrical interface (32, 54, 76, 88) of the exchange component (2), wherein the valve device (4, 4', 4", 4'"), a brake actuator (6, 6', 6"), a trailer control valve device (8, 8') and a control device (10, 10') are exchange components (2).

7. Valve device for a system (1) according to Claim 2,
**characterized by**
a development as the first variant (12) of the valve device (4) for use as an axle modulator or a wheel modulator in the electronically controlled embodiment of the brake system (90), wherein the valve block (34) is in the form of a triple solenoid valve block with three solenoid valves, by means of which the brake pressure can be adjusted electropneumatically according to a brake value and by means of an anti-lock brake system and by means of a stabilizing control means and by means of a drive slip control means and with which, in the event of a failure of the electropneumatic adjustment capability, the brake pressure can be adjusted pneumatically according to a redundant pressure.

8. Valve device for a system (1) according to Claim 2,
**characterized by**
a development as the second variant (14) of the valve device (4') for use in the pneumatically controlled embodiment of the brake system (90'), wherein the valve device (4') is in the form of a wheel modulator and the valve block (34') is in the form of a triple solenoid valve block with three solenoid valves (258, 276, 278), by means of which the brake pressure can be adjusted pneumatically according to the target brake pressure and can be adjusted electropneumatically by means of an anti-lock brake system or a drive slip control means.

9. Valve device for a system (1) according to Claim 2,
**characterized by**
a development as the second variant (14) of the valve device (4") for use in the pneumatically controlled embodiment of the brake system (90'), wherein the valve device (4") is in the form of an axle modulator and the valve block (34") is in the form of a single solenoid valve block with a solenoid valve (258), with which the brake pressure can be adjusted as the greater pressure of the pressure generated pneumatically according to the target brake pressure and the pressure generated electropneumatically by means of a drive slip control means.

10. Valve device for a system (1) according to Claim 2,
**characterized by**
a development as the second variant (14) of the valve device (4"') for use in the pneumatically controlled embodiment of the brake system (90'), wherein the valve device (4"') is in the form of a relay valve, by means of which the brake pressure can be adjusted according to the target brake pressure.

11. Valve device according to any one of Claims 7 to 10,
**characterized in that**
air ducts (231 to 238, 246 to 274) are arranged in the housing (36, 36') of the valve device, which ducts, depending on fitting of the valve device (4, 4', 4", 4"') with at least one valve cartridge or at least one valve block (34, 34', 34"), in particular a solenoid valve cartridge or a solenoid valve block, can be or are connected differently.

12. Brake actuator for a system (1) according to Claim 4,
**characterized by**
an embodiment as the first variant (12) of the brake actuator (6) with a brake value transmitter, which is suitable for use in the electronically controlled embodiment of the brake system (90), or by an embodiment as the second variant (14) of the brake actuator (6') with a brake valve, which is suitable for use in the pneumatically controlled embodiment of the brake system (90').

13. Trailer control valve device for a system (1) according to Claim 4,
**characterized by**
an embodiment as the first variant (12) of the trailer control valve device (8), which is suitable for use in the electronically controlled embodiment of the brake system (90) and comprises an electrical interface (76) as well as pneumatic interfaces (68, 70, 71, 72, 74), or as the second variant (14) of the trailer control valve device (8'), which is suitable for use in the pneumatically controlled embodiment of the brake system (90') and comprises pneumatic interfaces (68, 70, 71, 72, 74).

14. Control device for a system (1) according to Claim 4,
**characterized by**
an embodiment as the first variant (12) of the control device (10), which is suitable for use in the electronically controlled embodiment of the brake system (90), or as the second variant (14) of the control device (10'), which is suitable for use in the pneumatic embodiment of the brake system (90').

15. Brake system for a vehicle, in particular a commercial vehicle,
**characterized by**
at least one exchange component (2) of the system (1) according to Claim 4, in particular a valve device (4, 4', 4", 4"') according to Claim 7 or a brake actuator (6, 6', 6") according to Claim 12 o a trailer control valve device (8, 8') according to Claim 13 or a control device (10, 10') according to Claim 14.

16. Vehicle, in particular commercial vehicle,
**characterized by**
a brake system (90, 90') according to Claim 15 or a valve device (4, 4', 4", 4"') according to any one of Claims 7 to 11 or a brake actuator (6, 6', 6") according to Claim 12 or a trailer control valve device (8, 8') according to Claim 13 or a control device (10, 10') according to Claim 14.

17. Use of a valve device as the valve device (4, 4', 4", 4"') according to any one of Claims 7 to 11 or of a brake actuator as the brake actuator (6, 6', 6") according to Claim 12 or of a trailer control valve device as the trailer control valve device (8, 8') according to Claim 13 or of a control device as the control device (10, 10') according to Claim 14, in a system (1) according to any one of Claims 1 to 6.

18. Use according to Claim 17, wherein adapter according to Claim 6 is used.

19. Method for the conversion of a brake system,
**characterized in that**
at least one component of the brake system is replaced by an exchange component (2) of the system (1) according to Claim 4, in particular by a valve device (4, 4', 4", 4"') according to any one of Claims 7 to 11 or by a brake actuator (6, 6', 6") according to Claim 12 or by a trailer control valve device (8, 8') according to Claim 13 or by a control device (10, 10') according to Claim 14.

## Revendications

1. Système avec un dispositif de vannes (4, 4', 4", 4"') pour un système de freinage actionné pneumatiquement (90, 90') d'un véhicule,
- dans lequel le système freinage pneumatique (90, 90') comporte ce dispositif de vannes (4, 4', 4", 4"') et au moins un frein (92, 94, 96, 98) ; et
- dans lequel ce dispositif de vannes (4, 4', 4", 4"') permet de régler une pression pneumatique de freinage qui peut être appliquée au frein (92, 94, 96, 98) ;
**caractérisé en ce que**
- le système (1) comporte au moins deux variantes (12, 14) de ce dispositif de vannes (4, 4', 4", 4"') qui peuvent être utilisées alternativement dans le système de freinage (90, 90') ;
- une première variante (12) du dispositif de vannes (4, 4', 4", 4"') conçue en tant que modulateur (4) prévu pour être utilisé avec une version à régulation électronique du système de freinage (90) ;
- une deuxième variante (14) du dispositif de vannes (4, 4', 4", 4"') conçue pour être utilisée avec une version à commande pneumatique du système de freinage (90') ; et
- les variantes (12, 14) du dispositif de vannes (4, 4', 4", 4"') présentant des points de fixation mécaniques (16, 18, 20, 22) et des interfaces pneumatiques (24, 26, 28, 30) de même conception respective.

2. Système selon la revendication 1,
**caractérisé en ce que** les variantes (12, 14) du dispositif de vannes (4, 4', 4") comportent chacune un bloc de vannes (34, 34', 34") équipé d'au moins une électrovanne (258, 260, 262, 276, 278), en particulier un bloc d'électrovannes, dont les dimensions sont telles que les blocs de vannes (34, 34', 34") des variantes différentes (12, 14) du dispositif de vannes (4, 4', 4") puissent être reliés, mécaniquement par les mêmes moyens de fixation ou, pneumatiquement, par les mêmes interfaces pneumatiques internes (240 à 256), aux carters (36, 36') des dispositifs de vannes (4, 4', 4"), les carters (36, 36') des dispositifs de vannes (4, 4', 4") étant de forme extérieure essentiellement similaire et le bloc de vannes (34, 34', 34") correspondant étant disposé dans ceux-ci.

3. Système selon l'une quelconque des revendications précédentes,
**caractérisé en ce que**, dans une version à régulation électronique du système de freinage (90), la première variante (12) du dispositif de vannes (4) est conçue sous la forme d'un modulateur d'essieu ou d'un modulateur de roue, dans lequel le bloc de vannes (34) est un bloc d'électrovannes triple avec trois électrovannes au moyen desquelles la pression de freinage peut être commandée électropneumatiquement en fonction d'une valeur de freinage, ainsi qu'au moyen d'un système antiblocage, ainsi qu'au moyen d'un contrôle de stabilisation, ainsi qu'au moyen d'une régulation de patinage, et au moyen desquelles, en cas de panne de la fonction de commande électropneumatique, la pression de freinage peut être commandée pneumatiquement en fonction d'une pression redondante, et la deuxième variante (14) du dispositif de vannes (4', 4", 4''') sous la forme d'un modulateur de roue, prévu pour être utilisé avec une version à commande pneumatique du système de freinage (90'), dans lequel le bloc de vannes (34') est réalisé en tant que bloc d'électrovannes triple avec trois électrovannes (258, 276, 278), au moyen desquelles la pression de freinage peut être commandée pneumatiquement en fonction de la pression de freinage de consigne et électropneumatiquement au moyen d'un système antiblocage ou d'une régulation de patinage,
ou est conçue sous la forme d'un modulateur d'essieu, prévu pour être utilisé avec une version à commande pneumatique du système de freinage (90'), dans lequel le bloc de vannes (34") est réalisé en tant que bloc d'électrovanne simple comportant une seule électrovanne (258) qui règle la pression de freinage à la plus grande pression entre une pression produite pneumatiquement en fonction de la pression de freinage de consigne et une pression produite électropneumatiquement par une régulation de patinage, ou encore est conçue sous la forme d'une vanne-relais (4''') prévue pour être utilisée avec une version à commande pneumatique du système de freinage (90') et au moyen de laquelle la pression de freinage peut être réglée en fonction de la pression de freinage de consigne.

4. Système selon l'une quelconque des revendications précédentes,
**caractérisé en ce que** le dispositif de vannes (4, 4', 4", 4''') est l'un d'au moins deux composants de remplacement (2) du système, dont au moins deux variantes (12, 14) équipent à chaque fois le système (1), un dispositif d'actionnement des freins (6, 6', 6"), un dispositif de vannes de commande de remorque (8, 8') et un dispositif de commande (10, 10') étant des composants de remplacement (2), une première variante (12) du dispositif d'actionnement des freins (6) comportant un capteur de valeur de freinage, cette première variante (12) du dispositif d'actionnement des freins (6), la première variante (12) du dispositif de vannes (4), une première variante (12) du dispositif de vannes de commande de remorque (8) et une première variante (12) du dispositif de commande (10) pouvant être utilisées avec la version à régulation électronique du système de freinage (90),
une deuxième variante (14) du dispositif d'actionnement des freins (6', 6") comportant un clapet de freinage mais étant dépourvue de capteur de valeur de freinage, dans lequel cette deuxième variante (14) du dispositif d'actionnement des freins (6', 6"), la deuxième variante (14) du dispositif de vannes (4', 4", 4'''), une deuxième variante (14) du dispositif de vannes de commande de remorque (8') et une deuxième variante (14) du dispositif de commande (10') peuvent être utilisées avec la version à commande pneumatique du système de freinage (90'),
les variantes (12, 14) des composants de remplacement (2) du système (1), en particulier les variantes (12, 14) du dispositif d'actionnement des freins (6, 6', 6"), les variantes (12, 14) du dispositif de vannes (4, 4', 4", 4'''), les variantes (12, 14) du dispositif de vannes de commande de remorque (8, 8') et les variantes (12, 14) du dispositif de commande (10, 10') comportant chacune des points de fixation mécaniques (16, 18, 20, 22, 38, 40, 42, 62, 64, 66, 78, 80, 82, 84) réalisés de manière identique les uns par rapport aux autres et disposés de manière identique les uns par rapport aux autres au niveau de la variante respective (12, 14) les uns par rapport aux autres et des interfaces électriques (32, 54, 76, 88) identiques les unes par rapport aux autres, et les variantes (12, 14) du dispositif d'actionnement des freins (6, 6', 6"), du dispositif de vannes (4, 4', 4", 4''') et celles du dispositif de vannes de commande de remorque (8, 8') présentant des interfaces pneumatiques (24, 26, 28, 30, 46, 48, 50, 52, 68, 70, 71, 72, 74) à chaque fois identiques les unes par rapport aux autres.

5. Système selon l'une quelconque des revendications précédentes, **caractérisé par** des attaches, des tubes ou des tuyaux souples et des câbles ou des faisceaux de câbles en tant que composants de système qui peuvent être utilisés aussi bien dans la version à régulation électronique du système de freinage (90) que dans la version à commande pneumatique du système de freinage (90').

6. Système selon l'une quelconque des revendications précédentes,
**caractérisé en ce que** le dispositif de vannes (4, 4', 4", 4''') ou au moins un autre composant de remplacement (2) du système, comporte un composant prévu pour un système de freinage (90, 90'), ainsi qu'un adaptateur relié mécaniquement, pneumatiquement ou électriquement à ce composant, qui présente le point de fixation mécanique (16, 18, 20, 22, 38, 40, 42, 62, 64, 66, 78, 80, 82, 84), ou l'interface pneumatique (24, 26, 28, 30, 46, 48, 50, 52, 68, 70, 71, 72, 74), ou l'interface électrique (32, 54, 76, 88) du composant de remplacement (2), le dispositif de vannes (4, 4', 4", 4'''), un dispositif d'actionnement des freins (6, 6', 6"), un dispositif de vannes de commande de remorque (8, 8') et un système de commande (10, 10') étant des composants de remplacement (2).

7. Dispositif de vannes pour un système (1) selon la revendication 2,
**caractérisé par** une réalisation sous la forme de la première variante (12) du dispositif de vannes (4) prévu pour être utilisé comme modulateur d'essieu ou comme modulateur de roue avec la version à régulation électronique du système de freinage (90), dans lequel le bloc de vannes (34) est réalisé en tant que bloc d'électrovannes triple avec trois électrovannes, au moyen desquelles la pression de freinage peut être commandée électropneumatiquement en fonction d'une valeur de freinage, ainsi qu'au moyen d'un système antiblocage, ainsi qu'au moyen d'un contrôle de stabilisation, ainsi qu'au moyen d'une régulation de patinage, et au moyen desquelles, en cas de panne de la fonction de commande électropneumatique, la pression de freinage peut être commandée pneumatiquement en fonction d'une pression redondante.

8. Dispositif de vannes pour un système (1) selon la revendication 2, **caractérisé par** une réalisation sous la forme de la deuxième variante (14) du dispositif de vannes (4') prévu pour être utilisé avec la version à commande pneumatique du système de freinage (90'), dans lequel le dispositif de vannes (4') et le bloc de vannes (34') sont conçus respectivement comme modulateur de roue et comme bloc d'électrovannes triple avec trois électrovannes (258, 276, 278), au moyen desquelles la pression de freinage peut être commandée pneumatiquement en fonction de la pression de freinage de consigne, et électropneumatiquement au moyen d'un système antiblocage ou d'une régulation de patinage.

9. Dispositif de vannes pour un système (1) selon la revendication 2,
**caractérisé par** une réalisation sous la forme de la deuxième variante (14) du dispositif de vannes (4") prévu pour être utilisé avec la version à commande pneumatique du système de freinage (90'), dans lequel le dispositif de vannes (4") et le bloc de vannes (34") sont conçus respectivement comme modulateur d'essieu et comme bloc d'électrovanne simple avec une seule électrovanne (258), qui permet de régler la pression de freinage à la plus grande pression entre une pression produite pneumatiquement en fonction de la pression de freinage de consigne et la pression produite électropneumatiquement par une régulation de patinage.

10. Dispositif de vannes pour un système (1) selon la revendication 2, **caractérisé par** une réalisation sous la forme de la deuxième variante (14) du dispositif de vannes (4''') prévue pour être utilisé avec la version à commande pneumatique du système de freinage (90'), dans lequel le dispositif de vannes (4''') est réalisé en tant que vanne-relais qui permet de régler la pression de freinage en fonction de la pression de freinage de consigne.

11. Dispositif de vannes selon l'une quelconque des revendications 7 à 10, **caractérisé en ce que** des canaux pneumatiques (231 à 238, 246 à 274) sont disposés dans le carter (36, 36') du dispositif de vannes, lesquels canaux peuvent être ou sont commutés différemment selon que le dispositif de vannes (4, 4', 4", 4''') est équipé d'au moins une cartouche de vanne ou d'au moins un bloc de vannes (34, 34', 34"), en particulier une cartouche d'électrovannes ou un bloc d'électrovannes.

12. Dispositif d'actionnement des freins pour un système (1) selon la revendication (4), **caractérisé par** une réalisation sous la forme de la première variante (12) du dispositif d'actionnement des freins (6) à capteur de valeur de freinage, qui est prévue pour être utilisée avec la version à régulation électronique du système de freinage (90), ou par une réalisation sous la forme de la deuxième variante (14) du dispositif d'actionnement des freins (6') comprenant un clapet de freinage, qui est prévue pour être utilisée avec la version à commande pneumatique du système de freinage (90').

13. Dispositif de vannes de commande de remorque pour un système (1) selon la revendication 4, **caractérisé par** une réalisation sous la forme de la première variante (12) du dispositif de vannes de commande de remorque (8) qui est prévue pour être utilisée avec la version à régulation électronique du système de freinage (90) et qui présente une interface électrique (76) et des interfaces pneumatiques (68, 70, 71, 72, 74), ou sous la forme de la deuxième variante (14) du dispositif de vannes de commande de remorque (8') qui est prévue pour être utilisée avec la version à commande pneumatique du système de freinage (90') et qui présente des interfaces pneumatiques (68, 70, 71, 72, 74).

14. Dispositif de commande d'un système (1) selon la revendication (4), **caractérisé par** une réalisaiton sous la forme de la première variante (12) du dispositif de commande (10) qui est prévue pour être utilisée avec la version à régulation électronique du système de freinage (90), ou sous la forme de la deuxième variante (14) du dispositif de commande (10') qui est prévue pour être utilisée avec la version pneumatique du système de freinage (90').

15. Système de freinage d'un véhicule, en particulier un véhicule utilitaire,
**caractérisé par** au moins un composant de remplacement (2) du système (1) selon la revendication 4, en particulier un dispositif de vannes (4, 4', 4", 4''') selon la revendication 7 ou un dispositif d'actionnement des freins (6, 6', 6") selon la revendication 12, ou un dispositif de vannes de commande de remorque (8, 8') selon la revendication 13, ou un dispositif de commande (10,10') selon la revendication 14.

16. Véhicule, en particulier un véhicule utilitaire, **caractérisé par** un système de freinage (90, 90') selon la revendication 15, ou un dispositif de vannes (4, 4', 4", 4''') selon l'une quelconque des revendications 7 à 11, ou un dispositif d'actionnement des freins (6, 6', 6") selon la revendication 12, ou un dispositif de vannes de commande de remorque (8, 8') selon la revendication 13, ou un dispositif de commande (10,10') selon la revendication 14.

17. Utilisation, dans un système (1) selon l'une quelconque des revendications 1 à 6, d'un dispositif de vannes sous la forme du dispositif de vannes (4, 4', 4", 4''') selon l'une quelconque des revendications 7 à 11, ou d'un dispositif d'actionnement des freins sous la forme du dispositif d'actionnement des freins (6, 6', 6") selon la revendication 12, ou d'un dispositif de vannes de commande de remorque sous la forme du dispositif de vannes de commande de remorque (8, 8') selon la revendication 13, ou d'un dispositif de commande sous la forme du dispositif de commande (10, 10') selon la revendication 14.

18. Utilisation selon la revendication 17, dans laquelle est utilisé l'adaptateur selon la revendication 6.

19. Procédé de modification d'un système de freinage, **caractérisé en ce qu'**au moins un composant du système de freinage est remplacé par un composant de remplacement (2) du système (1) selon la revendication 4, en particulier par un dispositif de vannes (4, 4', 4", 4''') selon l'une quelconque des revendications 7 à 11, ou par un dispositif d'actionnement des freins (6, 6', 6") selon la revendication 12, ou par un dispositif de vannes de commande de remorque (8, 8') selon la revendication 13, ou par un dispositif de commande (10,10') selon la revendication 14.
